(19) **Europäisches Patentamt / European Patent Office / Office européen des brevets**

(11) **EP 2 684 930 A1**

(12) **EUROPEAN PATENT APPLICATION**
published in accordance with Art. 153(4) EPC

(43) Date of publication:
**15.01.2014 Bulletin 2014/03**

(51) Int Cl.:
*C09J 133/06* [(2006.01)]    *C09J 7/00* [(2006.01)]
*C09J 11/08* [(2006.01)]    *C09J 133/04* [(2006.01)]
*C09J 193/04* [(2006.01)]

(21) Application number: **12755317.0**

(22) Date of filing: **16.01.2012**

(86) International application number:
**PCT/JP2012/050713**

(87) International publication number:
**WO 2012/120920 (13.09.2012 Gazette 2012/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.03.2011 JP 2011052076**

(71) Applicant: **Nitto Denko Corporation**
**Ibaraki-shi, Osaka 567-8680 (JP)**

(72) Inventors:
• **OKADA, Mika**
  **Ibaraki-shi**
  **Osaka 567-8680 (JP)**
• **KITANO, Chie**
  **Ibaraki-shi**
  **Osaka 567-8680 (JP)**

(74) Representative: **Grünecker, Kinkeldey,**
**Stockmair & Schwanhäusser**
**Leopoldstrasse 4**
**80802 München (DE)**

(54) **WATER-DISPERSIBLE ADHESIVE COMPOSITION AND ADHESIVE SHEET**

(57) Provided is a water-dispersed pressure-sensitive adhesive composition useful for purposes of producing a pressure-sensitive adhesive sheet having high rough surface adhesiveness also in a good balance with the other properties, and so on. The pressure-sensitive adhesive composition comprises an acrylic polymer $pA_X$, and an acrylic polymer $pA_Y$ having a Mw of $1 \times 10^3$ to $50 \times 10^3$, at a mass ratio of 100:6-35. In $pA_X$, 60 to 99.5 % by mass of a $C_{2-18}$ alkyl (meth)acrylate $M1_X$ and 0.5 to 12 % by mass of a functional-group-containing monomer $M2_X$ are copolymerized while in $pA_Y$, 60 to 95 % by mass of a $C_{2-18}$ alkyl (meth)acrylate $M1_Y$ and 5 to 40 % by mass of a functional-group-containing monomer $M2_Y$ are copolymerized. When $SP_X$ and $SP_Y$ are solubility parameters calculated from $M1_X$ and $M1_Y$, the solubility difference $\Delta SP$ defined as $|SP_Y - SP_X|$ is 0.25 $(cal/cm^3)^{1/2}$ or greater.

[Figure 1]

FIG.1

**Description**

[Technical Field]

The present invention relates to a pressure-sensitive adhesive (PSA) composition in which an acrylic polymer is dispersed in an aqueous solvent and a PSA sheet comprising a PSA layer formed of this PSA composition. This application claims priority to Japanese Patent Application No. 2011-052076 filed on March 9th, 2011 and the entire contents thereof is incorporated in this description by reference.

[Background Art]

A water-dispersed PSA composition prepared with an aqueous solvent as a primary dispersion medium or solvent is desirable in view of reducing stress on the environment, as compared to a solvent-based PSA composition formed with an organic solvent as the medium. Thus, when producing a PSA sheet, it is also desirable to reduce usage of solvent-based PSA compositions and form PSA layers primarily from a water-dispersed PSA composition. As such water-dispersed PSA composition, for example, PSA compositions (e.g., an emulsion PSA in which a PSA component is dispersed in an aqueous medium) comprising an acrylic polymer as a PSA component in an aqueous medium, etc., are known. Technical literatures relating to water-dispersed acrylic PSA include Patent Documents 1 and 2.

[Citation List]

[Patent Literatures]

Patent Document 1: Japanese Patent Application Publication No. 2010-18689
Patent Document 2: Japanese Patent Application Publication No. S56-8476

[Summary of Invention]

[Technical Problem]

A PSA sheet comprising a PSA layer formed primarily of a water-dispersed PSA composition, however, has been likely to show insufficient adhesiveness (rough surface adhesiveness) to an adherend (e.g., a polyurethane foam, etc.), such as a foam, having a finely rugged surface (mostly due to air bubbles). In such a PSA sheet, it has been difficult to achieve a good balance of rough surface adhesiveness and the other properties (holding power, edge peel resistance, repulsion resistance, etc.).
A main objective of the present invention is to provide a water-dispersed PSA composition useful for a purpose of manufacturing a PSA sheet having high rough surface adhesiveness, which is also in a good balance with the other properties, and for other purposes as well. Another related objective is to provide a PSA sheet comprising a PSA layer formed of such a water-dispersed PSA composition.

[Solution to Problem]

The water-dispersed PSA composition provided by the present invention comprises an acrylic polymer $pA_X$ and an acrylic polymer $pA_Y$ at a mass ratio ($pA_X:pA_Y$) of 100:6 to 100:35. The polymer $pA_X$ has a copolymer composition containing 60 to 99.5 % by mass of an alkyl (meth)acrylate $M1_X$ having an alkyl group with 2 to 18 carbon atoms and 0.5 to 12 % by mass of a functional-group-containing monomer $M2_X$ when the total amount of all monomers constituting this polymer account for 100 %. The polymer $pA_Y$ has a weight average molecular weight Mw (referring to a weight average molecular weight based on standard polystyrene by gel permeation chromatography (GPC)) of $1 \times 10^3$ to $50 \times 10^3$, and has a copolymer composition containing 60 to 95 % by mass of an alkyl (meth)acrylate $M1_Y$ having an alkyl group with 2 to 18 carbon atoms and 5 to 40 % by mass of a functional-group-containing monomer $M2_Y$. When $SP_X$ is a solubility parameter calculated from a composition of an alkyl (meth)acrylate $M1_X$ constituting the polymer $pA_X$ and $SP_Y$ is a solubility parameter calculated from a composition of an alkyl (meth)acrylate $M1_Y$ constituting the polymer $pA_Y$, a solubility difference ASP defined as the absolute value $|SP_Y - SP_X|$ of a difference between $SP_Y$ and $SP_X$ is 0.25 $(\text{cal/cm}^3)^{1/2}$ or greater (about 0.5 $(\text{J/cm}^3)^{1/2}$ or greater).
In the description below, the number of carbon atoms in a range of a to b may be expressed as "$C_{a-b}$". For example, an alkyl (meth)acrylate having an alkyl group with 2 to 18 carbon atoms may be expressed as "$C_{2-18}$ alkyl

(meth)acrylate".

For the SP values ($SP_X$, $SP_Y$) of each polymer, can be used values determined by the Fedors equation:

$$SP = (E_v/v)^{1/2} = (\Sigma\Delta e_i/\Sigma\Delta v_i)^{1/2}$$

wherein $E_v$ is a vaporization energy, v is a molar volume, $\Delta e_i$ is a vaporization energy of an individual atom or a group of atoms, and $\Delta v_i$ is a molar volume of an individual atom or a group of atoms. With respect to an acrylic polymer having a copolymer composition containing two or more kinds of $C_{2-18}$ alkyl (meth)acrylates, the SP value of the homopolymer of each $C_{2-18}$ alkyl (meth)acrylate is multiplied by the corresponding mole fraction (i.e., the proportion to which the number of moles of the $C_{2-18}$ alkyl (meth)acrylate shares in the total number of moles of all $C_{2-18}$ alkyl (meth)acrylates) of the $C_{2-18}$ alkyl (meth)acrylate; and by combining these values, can be determined the SP value of the acrylic polymer.

Such a water-dispersed PSA composition comprises two different polymers $pA_X$ and $pA_Y$ at the prescribed ratio, with the polymer $pA_Y$ having a relatively low weight average molecular weight Mw of $I \times 10^3$ to $50 \times 10^3$, and further, $\Delta SP$ is 0.25 $(cal/cm^3)^{1/2}$ or greater; and therefore, even when adhered to a difficult-to-adhere adherend (e.g., a foam such as urethane foam, etc.) having a rugged surface, a PSA sheet comprising a PSA layer formed of this composition may exhibit good adhesiveness (adhesive reliability) to the adherend. Since the PSA sheet comprises a PSA layer formed of a water-dispersed PSA composition, it is preferable in terms of the environmental hygiene. Also, the PSA sheet may have sufficient holding power, edge peel resistance and repulsion resistance at the same time.

As the monomer $M2_Y$, at least one kind of carboxyl-group-containing monomer can be preferably used. According to a PSA composition containing a polymer $pA_Y$ having such a copolymer composition, can be obtained a PSA sheet exhibiting greater properties. Preferable examples of $M2_Y$ include acrylic acid and acrylic acid dimer. It may comprise either one or both of these.

The tetrahydrofuran(THF)-soluble portion of the polymer $pA_X$ preferably has a weight average molecular weight Mw (referring to a weight average molecular weight based on standard polystyrene by GPC) of $30 \times 10^4$ to $100 \times 10^4$. According to a PSA composition comprising a polymer $pA_X$ having such an Mw, can be obtained a PSA sheet exhibiting greater properties.

In a preferred embodiment, the PSA composition further comprises 5 to 40 parts by mass of a tackifier relative to 100 parts by mass of the polymer $pA_X$. According to such a PSA composition, can be obtained a PSA sheet exhibiting greater adhesive properties (e.g., a PSA sheet having one or two improved properties regarding the rough surface adhesiveness, holding power, edge peel resistance and repulsion resistance). Examples of especially preferable tackifiers include rosin-based resins.

The present invention also provides a PSA sheet comprising a PSA layer formed of a PSA composition disclosed herein. Such a PSA sheet may have good rough surface adhesiveness, and further have good holding power, edge peel resistance and repulsion resistance.

[Brief Description of Drawings]

Figure 1 shows a cross-sectional diagram schematically illustrating an example of a PSA sheet configuration.
Figure 2 shows a cross-sectional diagram schematically illustrating another example of a PSA sheet configuration.
Figure 3 shows a cross-sectional diagram schematically illustrating another example of a PSA sheet configuration.
Figure 4 shows a cross-sectional diagram schematically illustrating another example of a PSA sheet configuration.
Figure 5 shows a cross-sectional diagram schematically illustrating another example of a PSA sheet configuration.
Figure 6 shows a cross-sectional diagram schematically illustrating another example of a PSA sheet configuration.
Figure 7 shows an illustration describing the method of repulsion resistance test.
Figure 8 shows an illustration describing the method of repulsion resistance test.

[Description of Embodiments]

Preferred embodiments of the present invention are described below. Matters necessary to practice this invention other than those specifically referred to in this description may be understood as design matters to a person of ordinary skills in the art based on the conventional art in the pertinent field. The present invention can be practiced based on the contents disclosed in this description and common technical knowledge in the subject field. In the description below, materials or parts used to exhibit the same effect are assigned with the same reference sign and a redundant explanation may be omitted or simplified.

The PSA composition disclosed herein is an aqueous dispersion (typically, an aqueous emulsion) comprising two different acrylic polymers $pA_X$ and $pA_Y$ in an aqueous solvent, with the two different acrylic polymers $pA_X$ and $pA_Y$ comprising, respectively, an $C_{2-18}$ alkyl (meth)acrylate as its primary copolymer component. The total amount of these $pA_X$ and $pA_Y$ accounts preferably for 40 % by mass or greater and more preferably for 50 % or greater of the non-volatiles (PSA-forming components, which hereinafter may be referred to as "PSA") contained in the PSA composition. When the mass fraction of acrylic polymers contained in the PSA is too small, the balance of the adhesive properties may be likely to break down. The total amount of $pA_X$ and $pA_Y$ may accounts for essentially 100 % by mass of the PSA, but typically accounts for 95 % by mass or smaller and it is usually preferable that it accounts for 90 % by mass or smaller (e.g., 85 % by mass or smaller). When the mass fraction of acrylic polymers in the PSA is too large, the balance of the adhesive properties may be likely to break down.

The ratio of the polymer $pA_X$ to the polymer $pA_Y$ ($pA_X$:$pA_Y$) should be about 100:6 to 100:35 (preferably 100:10 to 100:35; e.g., 100:10 to 100:30) based on their masses. When the amount of $pA_Y$ is excessively small relative to $pA_X$, sufficient rough surface adhesiveness may not be achieved. When the amount of $pA_Y$ is too large, the holding power or the edge peel resistance may be low.

When $SP_X$ is a solubility parameter calculated from a composition of a $C_{2-18}$ alkyl (meth)acrylate constituting the polymer $pA_X$ and $SP_Y$ is a solubility parameter calculated from a composition of a $C_{2-18}$ alkyl (meth)acrylate constituting the polymer $pA_Y$, the PSA composition disclosed herein is characterized by having a solubility difference ASP of 0.25 $(cal/cm^3)^{1/2}$ or greater (about 0.5 $(J/cm^3)^{1/2}$ or greater), with ASP being defined as the absolute value of a difference between $SP_Y$ and $SP_X$ (i.e., $\Delta SP = |SP_Y - SP_X|$). ASP is preferably 0.30 $(cal/m^3)^{1/2}$ or greater (about 0.6 $(J/cm^3)^{1/2}$ or greater). When $\Delta SP$ is too small, in a PSA sheet comprising a PSA layer formed of this PSA composition, sufficient rough surface adhesiveness may not be obtained. Furthermore, at least either one of the repulsion resistance and edge peel resistance may be reduced.

Although the upper limit of $\Delta SP$ is not particularly limited, it is usually 0.70 $(cal/cm^3)^{1/2}$ or smaller (about 1.4 $(J/cm^3)^{1/2}$ or smaller) and is typically 0.60 $(cal/cm^3)^{1/2}$ or smaller (about 1.2 $(J/cm^3)^{1/2}$ or smaller). In a preferred embodiment, ASP is 0.50 $(cal/cm^3)^{1/2}$ or smaller (about 1.0 $(J/cm^3)^{1/2}$ or smaller). Although either one of $SP_X$ and $SP_Y$ can be greater than the other, for instance, an embodiment that meets $SP_X < SP_Y$ can be preferably employed. It is noted that as the SP value of each polymer, can be used a value determined by the Fedors equation based on the copolymer compositions of the $C_{2-18}$ alkyl (meth)acrylates in the polymer.

Although it is not clear as to why the effects disclosed herein are produced by that $\Delta SP$ is the desired value, the following reasons can be considered, for instance. That is, a PSA layer formed of a water-dispersed PSA composition having such a ASP profile is likely to assume a conformation where the low molecular weight polymer $pA_Y$ forms domains in a matrix of the polymer $pA_X$ having a relatively high molecular weight because the polymer $pA_X$ and the polymer $pA_Y$ are poorly soluble to each other. Thus, it is considered that the low molecular weight polymer $pA_Y$ tends to be more heavily distributed on the surface (adhesive surface) of the PSA sheet, thereby producing good rough surface adhesiveness. In addition, it is considered that because a functional-group-containing monomer (typically a carboxyl-group-containing monomer) is copolymerized in the polymer $pA_Y$, through interactions of such functional groups with a foam such as a urethane, etc., and the polymer $pA_X$, greater rough surface adhesiveness or holding power (cohesive strength) can be obtained.

As the values of vaporization energies and molar volumes, etc., of individual atoms or groups of atoms used in the calculation of SP values, can be used values listed in Journal of the Adhesion Society of Japan, Vol. 22, No. 10 (1986), p 566, etc. The SP values of various alkyl (meth)acrylate homopolymers given are, for example, 9.77 $(cal/cm^3)^{1/2}$ for butyl acrylate homopolymer, 9.22 $(cal/cm^3)^{1/2}$ for 2-ethylhexyl acrylate homopolymer, 10.20 $(cal/cm^3)^{1/2}$ for ethyl acrylate homopolymer, 9.15 $(cal/cm^3)^{1/2}$ lauryl acrylate homopolymer, 9.22 $(cal/cm^3)^{1/2}$ for isooctyl acrylate homopolymer. Although $(cal/cm^3)^{1/2}$ is usually used as the unit of a SP value, by multiplying this by 2.045, the unit of a SP value can be converted to the SI unit, $(J/cm^3)^{1/2}$.

As the polymer $pA_X$, can be preferably used a polymer having a $SP_X$ in a range of 9.1 to 10.0 (typically 9.2 to 9.8, e.g., 9.3 to 9.7) $(cal/cm^3)^{1/2}$. As the polymer $pA_Y$, can be preferably used a polymer having a $SP_Y$ in a range of 9.1 to 10.0 (typically 9.2 to 9.8) $(cal/cm^3)^{1/2}$, with $\Delta SP$ being 0.25 $(cal/cm^3)^{1/2}$ or greater. In an embodiment that meets $SP_X < SP_Y$, for instance, it is preferable to select compositions of the monomer $M1_X$ and the monomer $M1_Y$ so that $SP_X$ is in a range of 9.2 to 9.5 (preferably 9.3 to 9.5) $(cal/cm^3)^{1/2}$ while $SP_Y$ is in a range of 9.5 to 9.8 (typically 9.6 to 9.8) $(cal/cm^3)^{1/2}$, with ASP being 0.25 $(cal/cm^3)^{1/2}$ or greater.

In the following, the polymer $pA_X$ is described more in detail. This polymer $pA_X$ typically has a copolymer composition containing a $C_{2-18}$ alkyl (meth)acrylate (monomer $M1_X$) in an amount of 60 % by mass or greater (typically 60 to 99.5 % by mass) of the total amount of monomers (which hereinafter may be referred to as "all monomer components") constituting the polymer $pA_X$. In a preferred embodiment, the monomer $M1_X$ content in all monomer components is 70 % by mass or greater (typically 70 to 99.5 % by mass), with an example being 80 % by mass or greater (typically 80 to 99.5 % by mass). The monomer $M1_X$ content in all monomer components can also be 90 % by mass or greater (typically 90 to 99 % by mass). Such an acrylic polymer can be synthesized by polymerization (typically emulsion polymerization) of prescribed starting monomers. Usually, the monomer composition of the starting monomers approximately corresponds to the copolymer composition (copolymerization ratio) of the acrylic polymer obtained by polymerizing the starting monomers.

In this description, "(meth)acrylate" comprehensively refers to acrylate and methacrylate. Similarly, "(meth) acryloyl group" comprehensively refers to acryloyl and methacryloyl, and "(meth)acryl" comprehensively refers to acryl and methacryl.

As the monomer M $1_X$, can be used one, two or more kinds selected from $C_{2-18}$ alkyl (meth)acrylates represented by the following formula (I):

$$CH_2=C(R^1)COOR^2 \qquad (I)$$

(in the formula, $R^1$ is a hydrogen atom or a methyl group and $R^2$ is a $C_{2-18}$ alkyl group.)

Examples of $C_{2-18}$ alkyl (meth)acrylates include ethyl (meth)acrylate, n-propyl (meth)acrylate, isopropyl (meth) acrylate, n-butyl (meth)acrylate, isobutyl (meth)acrylate, s-butyl (meth)acrylate, t-butyl (meth)acrylate, n-pentyl (meth) acrylate, isoamyl (meth)acrylate, neopentyl (meth)acrylate, n-hexyl (meth)acrylate, n-heptyl (meth)acrylate, n-octyl (meth)acrylate, isooctyl (meth)acrylate, 2-ethylhexyl (meth)acrylate, n-nonyl (meth)acrylate, isononyl (meth)acrylate, n-decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate and so on.

In an embodiment of the art disclosed herein, of all monomer components constituting the polymer p$A_X$, 70 % by mass or greater (typically 70 to 99.5 % by mass) is a $C_{2-14}$ alkyl (meth)acrylate and is preferably a $C_{2-10}$ alkyl (meth) acrylate (e.g., a $C_{4-10}$ alkyl acrylate). For instance, a preferably used monomer composition contains either one or both of butyl acrylate (BA) and 2-ethylhexyl acrylate (2EHA) in a total amount of 70 % by mass or greater (typically 70 to 99 % by mass) of all monomer components or more preferably of 80 % by mass or greater (typically 80 to 98 % by mass). When BA and 2EHA are used in combination, their proportions used are not particularly limited. In a preferred embodiment, the monomer M I $_X$ consists essentially of either one or both of BA and 2EHA.

It is noted that when a monomer M1$_X$ has 90 % by mass of BA and 10 % by mass of 2EHA, the mole fraction of BA is 0.93 and the mole fraction of 2EHA is 0.07; and as mentioned above, the SP value of BA homopolymer is 9.77 $(cal/cm^3)^{1/2}$ and the SP value of 2EHA homopolymer is 9.22 $(cal/cm^3)^{1/2}$; and therefore, the SP value (SP$_X$) of the polymer p$A_X$ is calculated to be: $9.77 \times 0.93 + 9.22 \times 0.07 = 9.73$ $(cal/cm^3)^{1/2}$. When a monomer M1$_X$ has 30 % by mass of BA and 70 % by mass of 2EHA, the mole fraction of BA is 0.38 and the mole fraction of 2EHA is 0.62; and therefore, the SP value (SP$_X$) of the polymer p$A_X$ is calculated to be: $9.77 \times 0.38 + 9.22 \times 0.62 = 9.43$ $(cal/cm^3)^{1/2}$.

In the polymer p$A_X$, one, two or more kinds of functional-group-containing monomer M2$_X$ are copolymerized. The copolymerization ratio of such functional-group-containing monomer M2$_X$ is suitable to be, in total, 12 % by mass or smaller (typically 0.1 to 12 % by mass, e.g., 0.5 to 12 % by mass) of all monomer components and it is usually preferable to be 10 % by mass or smaller (typically 0.5 to 10 % by mass). When the amount of the functional-group-containing monomer is too small, the cohesive strength (holding power) may tend to be insufficient. When the amount of the functional-group-containing monomer is too large, the cohesive strength may become too high and the adhesive properties (e.g., adhesive strength) may tend to be low.

As the functional-group-containing monomers, can be preferably used various monomers having per molecule at least one each of radically polymerizable functional groups (typically, an ethylenically unsaturated group such as (meth)acryloyl group, vinyl group, etc.) and other functional groups.

Representative examples of such functional-group-containing monomers include carboxyl-group-containing monomers and their acid anhydrides. Examples of carboxyl-group-containing monomers include unsaturated monocarboxylic acids such as acrylic acid (AA), methacrylic acid (MAA), crotonic acid, cinnamic acid, etc.; monoesters of unsaturated dicarboxylic acids such as monomethyl itaconate, monobutyl itaconate, 2-acryloxyethyl phthalate, etc.; unsaturated dicarboxylic acids such as itaconic acid, meleic acid, fumaric acid, citraconic acid, etc.; monoesters of unsaturated tricarboxylic acids such as 2-methacryloxyethyl trimellitate, 2-methacryloxyethyl pyromellitate, etc.; carboxyalkyl acrylates such as carboxyethyl acrylate (β-carboxyethyl acrylate, etc.), carboxypentyl acrylate, etc.; acrylic acid oligomers such as dimer, trimer, etc., of acrylic acid; unsaturated dicarboxylic acid anhydrides such as itaconic acid anhydride, maleic acid anhydride, fumaric acid anhydride, etc.; and so on.

Other examples of functional-group-containing monomers include hydroxyl-group-containing monomers such as 2-hydroxyethyl (meth)acrylate, 2-hydroxypropyl(meth)acrylate, 2-hydroxybutyl (meth)acrylate, etc.; amide group-containing monomers such as (meth)acrylamide, N,N-dimethyl (meth)acrylamide, N,N-diethyl (meth)acrylamide, N-isopropyl (meth)acrylamide, N-butyl (meth)acrylamide, N-methoxymethyl (meth)acrylamide, N-methylol (meth)acrylamide, N-methylolpropane (meth)acrylamide, N-vinylcarboxylic acid amide, etc.; amino-group-containing monomers such as aminoethyl (meth)acrylate, N,N-dimethylaminoethyl (meth)acrylate, t-butylaminoethyl (meth)acrylate, etc.; glycidyl-group-containing monomers such as glycidyl (meth)acrylate, methylglycidyl (meth)acrylate, etc.; cyano-group-containing monomers such as (meth)acrylonitrile, etc.; maleimide-group-containing monomers such as N-cyclohexylmaleimide, N-isopropylmaleimide, N-laurylmaleimide, N-phenylmaleimide, etc.; itaconimide-group-containing monomers such as N-methylitaconimide, N-ethylitaconimide, N-butylitaconimide, N-octylitaconimide, N-2-ethylhexylitaconimide, N-cyclohexylitaconimide, N-laurylitaconimide, etc.; succinimide-group-containing monomers such as N-(meth)acryloxymethylene succinimide, N-(meth)acryloyl-6-oxyhexamethylene succinimide, N-(meth)acryloyl-8-oxyoctamethylene succinimide, etc.; sulfonate-group-containing monomers such as styrene sulfonate, allyl sulfonate, 2-(meth)acrylamide-2-methyl propane sulfonate, (meth)acrylamide propane sulfonate, sulfopropyl (meth)acrylate, (meth)acryloxynaphthalene sulfonate, etc.; phosphate-group-containing monomers such as 2-hydroxyethylacryloyl phosphate, etc.; isocyanate-group-containing monomers such as 2-methacryloxyethyl isocyanate, etc.; alkoxy-group-containing monomers such as methoxyethyl (meth)acrylate, ethoxyethyl (meth)acrylate, etc.; and so on. Other examples include epoxy acrylate, polyester acrylate, urethane acrylate, and so forth.

Yet other examples of functional-group-containing monomers include alkoxysilyl-group-containing monomers such as si licone-based (meth)acrylate monomers, silicone-based vinyl monomers, etc.

Examples of silicone-based (meth)acrylate monomers include (meth)acryloxyalkyl trialkoxysilanes such as (meth)acryloxymethyl trimethoxysilane, (meth)acryloxymethyl triethoxysilane, 2-(meth)acryloxyethyl trimethoxysi lane, 2-(meth)acryloxyethyl triethoxysilane, 3-(meth)acryloxypropyl trimethoxysilane, 3-(meth)acryloxypropyl triethoxysilane, 3-(meth)acryloxypropyl tripropoxysilane, 3-(meth)acryloxypropyl triisopropoxysilane, 3-(meth)acryloxypropyl tributoxysilane, etc.; (meth)acryloxyalkyl alkyl dialkoxysilanes such as (meth)acryloxymethyl methyl dimethoxysilane, (meth)acryloxymethyl methyl diethoxysilane, 2-(meth)acryloxyethyl methyl dimethoxysilane, 2-(meth)acryloxyethyl methyl diethoxysilane, 3-(meth)acryloxypropyl methyl dimethoxysilane, 3-(meth)acryloxypropyl methyl diethoxysilane, 3-(meth)acryloxypropyl methyl dipropoxysilane, 3-(meth)acryloxypropyl methyl diisopropoxysilane, 3-(meth)acryloxypropyl methyl dibutoxysilane, 3-(meth)acryloxypropyl ethyl dimethoxysilane, 3-(meth)acryloxypropyl ethyl diethoxysilane, 3-(meth)acryloxypropyl ethyl dipropoxysilane, 3-(meth)acryloxypropyl ethyl diisopropoxysilane, 3-(meth)acryloxypropyl ethyl dibutoxysilane, 3-(meth)acryloxypropyl propyl dimethoxysilane, 3-(meth)acryloxypropyl propyl diethoxysilane, etc.; and their corresponding (meth)acryloxyalkyl dialkyl (mono)alkoxysilanes; and so on.

Examples of silicone-based vinyl monomers include vinyltrialkoxysilanes such as vinyltrimethoxysilane, vinyltriethoxysilane, vinyltripropoxysilane, vinyltriisopropoxysilane, vinyltributoxysilane, etc.; their corresponding vinylalkyldialkoxysilanes and vinyldialkylalkoxysilanes; vinylalkyltrialkoxysilanes such as vinylmethyltrimethoxysilane, vinylmethyltriethoxysilane, β-vinylethyltrimethoxysi lane, β-vinylethyltriethoxysilane, γ-vinylpropyltrimethoxysilane, γ-vinylpropyltriethoxysilane, γ-vinylpropyltripropoxysilane, γ-vinylpropyltriisopropoxysilane, γ-vinylpropyltributoxysilane, etc.; and their corresponding (vinylalkyl)alkyldialkoxysilanes and (vinylalkyl)dialkyl(mono)alkoxysilanes; and so on.

Of these functional-group-containing monomers, as the functional-group-containing monomer $M2_X$ used as a component of the polymer $pA_X$, can be preferably used, for instance, one, two or more kinds selected from carboxyl-group-containing monomers or their acid anhydrides. Essentially all of the functional-group-containing monomer $M2_X$ may be a carboxyl-group-containing monomer. Examples of particularly preferable carboxyl-group-containing monomers include AA and MAA. Of these, one kind can be used solely, or AA and MAA can be used in combination at prescribed proportions.

In a preferred embodiment of the art disclosed herein, AA and MAA are copolymerized in the polymer $pA_X$. According to a PSA composition comprising an acrylic polymer having such a copolymer composition, can be obtained a PSA sheet having greater repulsion resistance. The mass ratio ofAA to MAA (AA:MAA) can be in a range of, for example, about 1:10 to 10: 1 and it is usually preferable to be in a range of about 1:4 to 4:1 I (e.g., 1:2 to 2:1). When a carboxyl-group-containing monomer is copolymerized, the amount copolymerized (when several kinds of carboxyl-group-containing monomers are used, their combined amount) is suitable to be, for instance, 12 % by mass or smaller (typically 0.1 to 12 % by mass, e.g., 0.5 to 12 % by mass) of all monomer components and it is usually suitable to be 10 % by mass or smaller (typically 0.5 to 10 % by mass, e.g., about 0.5 to 5 % by mass).

In another preferred embodiment of the art disclosed herein, the functional-group-containing monomer $M2_X$ constituting the polymer $pA_X$ comprises an alkoxysilyl-group-containing monomer. This allows introduction of alkoxysilyl groups into the polymer chain and by their reactions with each other, a cross-linked structure can be formed. Copolymerizing these alkoxysilyl-group-containing monomers can be an effective means in terms of obtaining a PSA sheet capable of exhibiting high levels of rough surface adhesiveness and cohesive strength (holding power) at the same time. When an alkoxysilyl-group-containing monomer is copolymerized, the amount copolymerized (when several kinds of alkoxysilyl-group-containing monomers are used, their combined amount) is suitable to be, for instance, 0.2 % by mass or less (typically 0.001 to 0.2 % by mass) and it is usually suitable to be 0.1 % by mass or less (typically 0.005 to 0.1 % by mass, e.g., about 0.01 to 0.05 % by mass).

In a preferred embodiment, the functional-group-containing monomer $M2_X$ in the polymer $pA_X$ comprises at least one, two or more kinds selected from carboxyl-group-containing monomers or their acid anhydrides; and one, two or more kinds selected from alkoxysilyl-group-containing monomers. The polymer $pA_X$ can be such that essentially all of the functional-group-containing monomer $M2_X$ consists of either one or both of AA and MAA, and a silicone-based (meth)acrylate monomer.

Besides the monomers described above, a different monomer M3x (copolymerizable monomer) copolymerizable with the monomer $M1_X$ may be copolymerized as an optional component in the polymer $pA_X$. Examples of such copolymerizable monomers include alkyl (meth)acrylate with the alkyl having one carbon atom, or 19 or more carbon atoms; vinyl esters such as vinyl acetate, etc.; aromatic unsaturated monomers such as styrene, vinyl toluene, etc.; (meth)acrylates of aliphatic alcohols such as cyclopentyl (meth)acrylate, isobornyl (meth)acrylate, etc.; olefinic monomers such as ethylene, propylene, isopropylene, butadiene, isobutylene, etc.; vinyl-ether-based monomers such as vinyl ether, etc.; vinyl-group-containing heterocyclic compounds such as N-vinylpyrrolidone, N-(1-methylvinyl) pyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, (meth)acryloylmorpholine, tetrahydrofurfuryl (meth)acrylate, etc.; halogen-atom-containing monomers such as vinyl chloride, fluorinated alkyl (meth)acrylates, etc.; and so on.

Other usable copolymerizable monomers include multi-functional monomers having two or more radically polymerizable functional groups (typically, ethylenic unsaturated groups such as (meth)acryloyl group, vinyl group, etc.) per molecule. Examples of such multi-functional monomers include (mono or poly)ethylene glycol di(meth)acrylates such as ethylene glycol di(meth)acrylate, diethylene glycol di(meth)acrylate, triethylene glycol di(meth)acrylate, trimethylolpropane tri(meth)acrylate, tetraethylene glycol di(meth)acrylate, etc.; (mono or poly)alkylene glycol di(meth)acrylates such as (mono or poly)propylene glycol di(meth)acrylates, etc. such as propylene glycol di(meth)acrylate, etc.; as well as neopentyl glycol di(meth)acrylate, 1,6-hexane-di-ol di(meth)acrylate, pentaerythritol di(meth)acrylate, trimethylolpropane tri(meth)acrylate, pentaerythritol tri(meth)acrylate, dipentaerythritol hexa(meth)acrylate, tetramethylolmethane tri (meth)acrylate, cyclopentyl di(meth)acrylate, divinylbenzene and so on.

The copolymerization ratio of the copolymerizable monomer $M3_X$ in the polymer $pA_X$ is suitable to be 39.5 % by mass or smaller (typically 30 % by mass or smaller, for instance, 20 % by mass or smaller) of all monomer components and it is usually preferable to be 10 % by mass or smaller (e.g., 5 % by mass or smaller). The copolymer composition may be essentially free of a copolymerizable monomer $M3_X$ (such that the copolymerization ratio of $M3_X$ is smaller than 0.5 % by mass).

As the method for polymerizing such monomers to form a polymer $pA_X$, a known or conventional polymerization method can be employed and in particular, emulsion polymerization method can be preferably used. An aqueous emulsion of a polymer $pA_X$ obtained by such a method can be used as is for forming a water-dispersed PSA composition. As the method for supplying monomers when carrying out emulsion polymerization, can be appropriately employed an all-at-once supplying method where the starting monomers are supplied entirely at once, a continuous supplying (dropping) method, a portion-wise supplying (dropping) method or the like. Monomers can be partially or entirely (in typical, entirely) mixed and pre-emulsified in water (typically an appropriate amount of an emulsifier is used along with water) and the resulting emulsion (monomer emulsion) can be supplied into a reaction vessel entirely at once, continuously, or portion-wise. The polymerization temperature can be suitably selected according to the kinds of monomers and the type of a polymerization initiator, etc., to be used, and it can be, for instance, around 20°C to 100°C (typically 40°C to 80°C).

The polymerization initiator used in polymerization can be suitably selected from known or conventional polymerization initiators in accordance with the kind of the polymerization method. For instance, in an emulsion polymerization method, an azo-based polymerization initiator can be preferably used. Examples of azo-based polymerization initiators include 2,2'-azobisisobutyronitrile (AIBN), 2,2'-azobis(2-methylpropionamidine) disulfate salt, 2,2'-azobis(2-amidinopropane) dihydrochloride, 2,2'-azobis[2-(5-methyl-2-imidazolin-2-yl)propane] dihydrochloride, 2,2'-azobis(N,N'-dimethylene isobutylamidine), 2,2'-azobis[N-(2-carboxyethyl)-2-methylpropionamidine] hydrate, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azobis(2,4,4-trimethylpentane), dimethyl-2,2'-azobis(2-methylpropionate), and so on.

Other examples of polymerization initiators include persulfate salts such as potassium persulfate, ammonium persulfate, etc.; peroxide-based initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, 1,1-bis(t-butylperoxy)cyclododecane, hydrogen peroxide, etc.; substituted ethane-based initiators such as phenyl-substituted ethane, etc.; carbonyl-based initiators such as aromatic carbonyl compounds, etc.; and so on. Yet other examples of polymerization initiators include redox-based initiators, with each combining a peroxide and a reducing agent. Examples of such redox-based initiators include a combination of a peroxide (hydrogen peroxide, etc.) and ascorbic acid, a combination of a persulfate and sodium hydrogen sulfite, and so on.

Of these polymerization initiators, one kind can be used solely, or two or more kinds can be used in combination. The amount of the polymerization initiator can be selected, for instance, from a range of about 0.005 to 1 part by mass (typically 0.01 to 1 part by mass) relative to 100 parts by mass of all monomer components used for the synthesis of $pA_X$.

In the polymerization, as necessary, can be used a chain transfer agent (which can be understood also as a molecular weight-adjusting agent or a polymerization degree-adjusting agent) of various kinds heretofore known. Such chain transfer agent may be, for instance, one, two or more kinds selected from mercaptans such as n-lauryl mercaptan, tert-lauryl mercaptan, glycidyl mercaptan, 2-mercaptoethanol, and so on. Of these, use of tert-lauryl mercaptan is particularly preferable. The amount of the chain transfer agent can be, for instance, about 0.001 to 0.5 part by mass relative to 100 parts by mass of all monomer components used for the synthesis of $pA_X$. This amount can be about 0.02 to 0.05 part by mass.

According to such emulsion polymerization, can be obtained a polymerization reaction mixture in an emulsion form where an acrylic polymer $pA_X$ is dispersed in water. As an aqueous emulsion of the polymer $pA_X$ in the art disclosed herein, can be preferably used the polymerization reaction mixture or the reaction mixture that has been appropriately processed in subsequent steps. Alternatively, can be used an aqueous emulsion of a polymer $pA_X$ prepared by synthesizing the polymer $pA_X$ by a polymerization method (e.g., solution polymerization, photopolymerization, bulk polymerization, etc.) other than the emulsion polymerization method and dispersing this polymer in water. The subsequent processes encompass, for instance, adjusting the pH of a liquid phase of an emulsion to about 7 to 9 (e.g., about 7 to 8) with a base (aqueous ammonia, etc.) or an acid.

In preparation of an aqueous emulsion of a polymer $pA_X$, an emulsifier can be used as necessary. As the emulsifier, any of anionic, non-ionic, and cationic emulsifiers can be used. Usually, an anionic or a non-ionic emulsifier is preferably used. Such an emulsifier can be preferably used in situations when a polymer $pA_X$ is synthesized by emulsion polymerization of starting monomers, when an acrylic polymer $pA_X$ obtained by a different method is dispersed into water, and so on. Examples of anionic emulsifiers include sodium lauryl sulfate, ammonium lauryl sulfate, sodium dodecyl benzene sulfonate, sodium polyoxyethylene alkyl ether sulfate, ammonium polyoxyethylene alkyl phenyl ether sulfate, sodium polyoxyethylene alkyl phenyl ether sulfate, and so on. Examples of non-ionic emulsifiers include polyoxyethylene alkyl ether, polyoxyethylene alkyl phenyl ether, and the like. A radically polymerizable emulsifier (reactive emulsifier) having a structure with a radically polymerizable group (e.g., propenyl group, etc.) introduced into such an anionic or non-ionic emulsifier described above may also be used. Alternatively, an emulsifier not having such a radically polymerizable group may be used solely.

Of these emulsifiers, one kind can be used solely, or two or more kinds can be used in combination. An emulsifier can be used in an amount that allows preparation of an acrylic polymer in an emulsion form and the amount used is not particularly limited. Usually, it can be suitably selected from, for instance, a range of about 0.2 to 10 parts by mass (preferably about 0.5 to 5 parts by mass) relative to 100 parts by mass of the acrylic polymer, based on the solid contents.

The THF-soluble portion of the polymer $pA_X$ preferably has a weight average molecular weight Mw in a range of about $30 \times 10^4$ to $100 \times 10^4$. When Mw is too small, the resulting PSA layer may tend to have a low cohesive strength. In addition, it may make it difficult to produce a structure in which a low molecular weight polymer $pA_Y$ forms domains in a matrix of the polymer $pA_X$ and may lead to reduced rough surface adhesiveness.

For the weight average molecular weight Mw of the polymer $pA_X$, a value measured by the following method is used.

<Method for measuring Mw of polymer $pA_X$>

A sample of an acrylic polymer $pA_X$ as a measurement subject is immersed in THF at 23°C for seven days to extract its THF-soluble portion. Its THF-insoluble portion is removed by filtration and the resulting filtrate is concentrated or diluted as necessary with THF to prepare a THF solution containing the THF-soluble portion at a concentration of 0.1 to 0.3 % by mass. This THF solution is filtered through a filter having an average pore diameter of 0.45 $\mu$m, and with respect to the resulting filtrate, the weight average molecular weight Mw is determined based on standard polystyrene by gel permeation chromatography (GPC) device. As the GPC device, can be used, for instance, model number "HLC-8320GPC" (column: TSKgel GMH-H(S)) available from Tosoh Corporation or a device with similar sensitivity. As the sample of an acrylic polymer $pA_X$, a polymer $pA_X$ obtained by emulsion polymerization may be used after dried (e.g., dried at 130°C for about 2 hours).

In the following, the polymer $pA_Y$ is described more in detail. This polymer $pA_Y$ is an acrylic polymer having a relatively low molecular weight (in particular, having a weight average molecular weight Mw in a range of about $1 \times 10^3$ to $50 \times 10^3$) and has a copolymer composition containing a $C_{2-18}$ alkyl (meth)acrylate $M1_Y$ and a functional-group-containing monomer $M2_Y$. It is noted that in the present description, "functional-group-containing monomer $M2_Y$" is used in a sense encompassing not only monomer, but also oligomer (typically dimer or trimer). The polymer $pA_Y$ has an Mw of preferably about $1.5 \times 10^3$ to $9 \times 10^3$, more preferably about $2 \times 10^3$ to $8 \times 10^3$, or even more preferably about $2 \times 10^3$ to $5 \times 10^3$. When Mw of the polymer $pA_Y$ is too small, the resulting PSA layer may have reduced cohesive strength. When Mw is too large, the rough surface adhesiveness may not be sufficiently increased

For the weight average molecular weight Mw of a low molecular weight acrylic polymer $pA_Y$, a value measured by the following method is used.

<Method for measuring Mw of polymer $pA_Y$>

A solution subjected to measurement is prepared to contain an acrylic polymer $pA_Y$ as a measurement subject at a concentration of 0.1 to 0.3 % by mass (e.g., 0.2 % by mass) in 10-mM LiBr + 10 mM phosphoric acid/DMF (diluent). With respect to a filtrate obtained by filtering this solution through a filter having an average pore diameter of 0.45 μm, the weight average molecular weight Mw is determined based on standard polystyrene by GPC device. As the GPC device, can be used, for instance, model number "HLC-8120GPC" available from Tosoh Corporation or a device with similar sensitivity. In particular, Mw of a polymer $pA_Y$ can be measured by applying the Mw measurement conditions according to the examples described later. When a polymer $pA_Y$ is synthesized by solution polymerization, as the solution subjected to measurement, can be used, for instance, a solution prepared by diluting a polymerization reaction mixture (typically, a solution containing a polymer $pA_Y$ at a concentration of 20 % by mass or greater) with the diluent. When some of a polymer $pA_Y$ does not dissolve in THF, the weight average molecular weigh Mw based on standard polystyrene is determined in the same way as with the polymer $pA_X$ with respect to the soluble portion extracted by immersing the polymer $pA_Y$ in THF at 23°C for seven days.

The amount of $M1_Y$ in all monomer components constituting a polymer $pA_Y$ should be about 60 to 95 % by mass (more preferably about 70 to 95 % by mass, e.g., about 70 to 92 % by mass). The amount of $M2_Y$ in all monomer components constituting a polymer $pA_Y$ should be about 5 to 40 % by mass (preferably about 7 to 37 % by mass, e.g., about 7 to 35 % by mass). More preferably, it should be 5 to 30 % by mass (typically 8 to 30 % by mass). When the amount of $M2_Y$ is too small, in a PSA sheet comprising a PSA layer formed of a water-dispersed PSA composition containing this polymer $pA_Y$, of its rough surface adhesiveness, repulsion resistance, holding power and edge peel resistance, at least one property may be insufficient. When the amount of $M2_Y$ is too large, sufficient rough surface adhesiveness may not be realized.

As for the $C_{2-18}$ alkyl (meth)acrylate as a primary monomer $M1_Y$ in a polymer $pA_Y$, can be used the same monomers as the $C_{2-18}$ alkyl (meth)acrylates (preferably $C_{2-14}$ alkyl (meth)acrylates, e.g., $C_{2-10}$ alkyl (meth)acrylates) listed as examples of the monomer $M1_X$ that can be used in preparation of a polymer $pA_X$. Of such $C_{2-18}$ alkyl (meth) acrylates, one kind can be used solely, or two or more different kinds can be used in combination. The composition of a monomer $M1_Y$ can be selected in consideration of the composition (i.e., $SP_X$) of a monomer $M1_X$ so as to obtain a desired ΔSP. Similarly, the composition of a monomer $M1_X$ can be selected in consideration of the composition (i.e., $SP_Y$) of a monomer $M1_Y$ so as to obtain a desired ΔSP.

In an embodiment of the art disclosed herein, of all monomer components constituting the polymer $pA_Y$, 70 to 95 % by mass (e.g., 70 to 92 % by mass) is a $C_{2-14}$ alkyl (meth)acrylate, and is preferably $C_{2-10}$ alkyl (meth)acrylate (e.g., $C_{4-10}$ alkyl acrylate). In a preferred embodiment, the monomer $M1_Y$ consists essentially of either one or both of BA and 2EHA. The ratio of BA to 2EHA used is not particularly limited.

The art disclosed herein may be preferably practiced in an embodiment where the polymer $pA_X$ has a copolymer composition containing at least 50 % by mass (typically 70 to 95 % by mass, e.g., 70 to 92 % by mass) of a $C_{7-18}$ alkyl (meth)acrylate (preferably $C_{7-14}$ alkyl (meth)acrylate, e.g., $C_{7-10}$ alkyl acrylate), and the polymer $pA_Y$ has a copolymer composition containing at least 50 % by mass (typically 70 to 95 % by mass, e.g., 70 to 92 % by mass) of a $C_{2-6}$ alkyl (meth)acrylate (e.g., $C_{3-6}$ alkyl (meth)acrylate, typically $C_{4-6}$ alkyl acrylate). According to such an embodiment, can be obtained a PSA sheet having especially good rough surface adhesiveness as well as good repulsion resistance, and a PSA composition capable of forming this PSA sheet. An example of this embodiment given is that the monomer $M1_X$ is essentially 2EHA and the monomer $M1_Y$ is essentially BA.

The art disclosed herein may be preferably practiced in an embodiment where the polymer $pA_X$ has a copolymer composition containing at least 50 % by mass (typically 70 to 95 % by mass, e.g., 70 to 92 % by mass) of a $C_{2-6}$ alkyl (meth)acrylate (e.g., $C_{3-6}$ alkyl (meth)acrylate, typically $C_{4-6}$ alkyl acrylate), and the polymer $pA_Y$ has a copolymer composition containing at least 50 % by mass (typically 70 to 95 % by mass, e.g., 70 to 92 % by mass) of a $C_{7-18}$ alkyl (meth)acrylate (preferably $C_{7-14}$ alkyl (meth)acrylate, e.g., $C_{7-10}$ alkyl acrylate). According to such an embodiment, can be obtained a PSA sheet having especially good rough surface adhesiveness as well as good repulsion resistance, and a PSA composition capable of forming this PSA sheet. An example of this embodiment given is that the monomer $M1_X$ is essentially BA and the monomer $M1_Y$ is essentially 2EHA.

As the functional-group-containing monomer $M2_Y$, with $M2_Y$ being a secondary component constituting the polymer $pA_Y$, can be used the same functional-group-containing monomers listed as examples of the monomer $M2_X$ that can be used for preparation of a polymer $pA_X$. Of these functional-group-containing monomers, one kind can be used solely, or two or more kinds can be used in combination.

In a preferred embodiment, the monomer $M2_Y$ comprises at least a carboxyl-group-containing monomer. For instance, of the carboxyl-group-containing monomers listed as examples of the monomer $M2_X$ that can be used for preparation of a polymer $pA_X$, as the monomer $M2_Y$, can be preferably used acrylic acid, methacrylic acid, an acrylic acid oligomer (typically dimer), and so on. Examples of particularly preferable carboxyl-group-containing monomers include acrylic acid and acrylic acid dimer (e.g., trade name "Aronix M5600" available from Toagosei Co., Ltd., or a similar product). Of these carboxyl-group-containing unsaturated compounds, one kind can be used solely, or two or more kinds can be used in combination.

Besides the monomers described above, a different monomer (copolymerizable monomer) $M3_Y$ copolymeriz-

able with Monomer M1$_Y$ may be copolymerized as an optional component in the polymer pA$_Y$. As such a copolymerizable monomer, can be used the same copolymerizable monomers listed as examples of the monomer M3$_X$ that can be used in preparation of a polymer pA$_X$. Of these functional-group-containing monomers, one kind can be used solely, or two or more kinds can be used in combination.

The copolymerization ratio of the copolymerizable monomer M3$_Y$ in a polymer pA$_Y$ is suitable to be, in total, 35 % by mass or smaller (typically 30 % by mass or smaller, e.g., 20 % by mass or smaller) of all monomer components and it is usually preferable to be 10 % by mass or smaller (e.g., 5 % by mass or smaller). The copolymer composition may be essentially free of a copolymerizable monomer M3$_Y$ (such that the copolymerization ratio of M3$_Y$ is smaller than 0.5 % by mass).

Although not particularly limited, as the polymer pA$_Y$, can be preferably used a polymer having a Tg of -15°C or below (typically -70°C to -15°C, preferably -60°C to -15°C, e.g., about -50°C to -20°C). A polymer pA$_Y$ having such a Tg may produce a better effect of increasing the rough surface adhesive strength.

Here, Tg refers to a value obtained from the Fox equation based on the Tg's of the corresponding homopolymers of the respective monomers constituting the polymer pA$_Y$ as well as the mass fractions (copolymerization ratios based on their masses) of these monomers. As the Tg's of homopolymers, values described in published documents are used. In the art disclosed herein, as the Tg's of homopolymers, the following values are used specifically:

| | |
|---|---|
| 2-ethylhexyl acrylate | -70°C |
| butyl acrylate | -55°C |
| ethyl acrylate | -22°C |
| methyl acrylate | 8°C |
| methyl methacrylate | 105°C |
| cyclohexyl methacrylate | 66°C |
| vinyl acetate | 32°C |
| styrene | 100°C |
| acrylic acid | 106°C |
| methacrylic acid | 130°C |

With respect to an acrylic acid dimer (trade name "Aronix M5600" available from Toagosei Co., Ltd.) used in the later examples, 12°C is used for the Tg of its homopolymer. Furthermore, with respect to the monomers other than those listed above, of which the Tg's of homopolymers are not listed in published documents, values determined by the following method are used as the Tg's of their homopolymers: that is, a subject monomer is polymerized in a solution to synthesize a homopolymer having a weight average molecular weight of $5 \times 10^4$ to $10 \times 10^4$ and the resulting homopolymer solution is casted and dried on a release liner to prepare a test sample; with respect to this test sample, using a differential scanning calorimeter (DSC), model number "DSC6220", available from SII Nano Technology Inc., differential scanning calorimetry is performed, changing the temperature from -80°C to 280°C at a heating rate of 10°C/min; and the starting temperature of the initial endothermic transition is used as the Tg of this homopolymer.

As the method for polymerizing these monomers (typically, under an inert gas atmosphere such as a nitrogen gas atmosphere) to form a polymer pA$_Y$, can be employed a known or conventional polymerization method (emulsion polymerization, bulk polymerization (mass polymerization), photopolymerization, solution polymerization, etc.). In view of reducing environmental stress, etc., emulsion polymerization and bulk polymerization are preferable as the polymerization method. By emulsion polymerization, the polymer pA$_{\backslash Y}$ is obtained in an emulsion form, and such a pA$_{\backslash Y}$ is preferable since it can be easily mixed with an aqueous emulsion of the polymer pA$_{\backslash X}$. Alternatively, solution polymerization is advantageous in that the molecular weight of a polymer pA$_Y$ can be easily adjusted.

As the method for supplying monomers when carrying out polymerization, can be appropriately employed an all-at-once supplying method, a continuous supplying (dropping) method, a portion-wise supplying (dropping) method or the like. Monomers can be partially or entirely (in typical, entirely) pre-dissolved or pre-dispersed in a solvent and the resulting solution may be supplied into a reaction vessel entirely at once, continuously, or portion-wise. The polymerization temperature can be suitably selected according to the kinds of monomers and the type of polymerization initiator, etc., to be used, and it can be, for instance, around 20°C to 100°C (typically 40°C to 80°C). The polymerization time (reaction time) can be, for instance, 1 to 12 hours (typically 4 to 12 hours).

As the polymerization initiator, a known or conventional polymerization initiator can be used without particular limitations, and one of the polymerization initiators described earlier can be suitably selected for use. Of these polymerization initiators, one kind can be used solely, or two or more kinds can be used in combination. The amount of a polymerization initiator can be appropriately adjusted so as to obtain a polymer pA$_Y$ having a desired Mw. For instance, it can be selected from a range of about 0.01 to 10 parts by mass (typically 0.05 to 5 parts by mass) relative to 100 parts by mass of all monomer components used for the synthesis of a polymer $pA_Y$.

In the polymerization, as necessary, can be used a chain transfer agent (which can be understood also as a molecular weight adjusting agent or a polymerization degree adjusting agent) of various kinds heretofore known. Such chain transfer agent may be one, two or more kinds selected from, for instance, mercaptans such as n-lauryl mercaptan, tert-lauryl mercaptan, glycidyl mercaptan, 2-mercaptoethanol, and so on. Of these, use of tert-lauryl mercaptan is particularly preferable. The amount of a chain transfer agent used can be suitably adjusted so as to obtain a polymer $pA_Y$ having a desired Mw. The amount of a chain transfer agent can be, for instance, about 0.1 to 30 parts by mass relative to 100 parts by mass of all monomer components used in the synthesis of $pA_Y$ although not particularly limited thereto. This amount may be about 1 to 30 parts by mass or may be about 5 to 30 parts by mass (e.g., 10 to 30 parts by mass).

When collecting a so-synthesized acrylic polymer $pA_Y$ from a reaction vessel, a small amount of a suitable organic solvent (e.g., toluene, xylene, benzene, etc.) can be added to the reaction vessel in order to reduce the viscosity of the remaining residue for facile collection. This technique can be used preferably, for instance, when the synthesis of the acrylic polymer $pA_Y$ is carried out by bulk polymerization.

An acrylic polymer $pA_Y$ obtained by such polymerization can be added, after suitable processes are subsequently performed as necessary, to an aqueous emulsion of the polymer $pA_X$ described earlier. This allows preparation of an aqueous emulsion comprising $pA_X$ and $pA_Y$. For instance, when a polymer $pA_Y$ is obtained in a form essentially free of volatiles by bulk polymerization or photopolymerization, can be employed (1) a method in which the polymer $pA_Y$ is added, as is, to and mixed with stirring in an aqueous emulsion of $pA_X$; (2) a method in which after an aqueous emulsion of $pA_Y$ is prepared by a subsequent process where the polymer $pA_Y$ is vigorously stirred with water and an emulsifier, the resultant is added to an aqueous emulsion of $pA_X$; or the like. When $pA_Y$ is obtained in a form containing an organic solvent as when a polymer $pA_Y$ is synthesized by solution polymerization or when a small amount of an organic solvent is added in order to facilitate collection of a residue remaining after bulk polymerization, etc., can be employed (3) a method in which the polymer $pA_Y$ is added, as is, to and mixed with stirring in an aqueous emulsion of $pA_X$, or alternatively; (4) a method in which after an aqueous emulsion of $pA_Y$ is prepared by a subsequent process where the polymer $pA_Y$ is vigorously stirred with water and an emulsifier, the resultant is added to an aqueous emulsion of $pA_X$; (5) a method in which the aqueous emulsion of $pA_Y$ prepared in (4) is further subjected to another subsequent process where the organic solvent is removed from this emulsion under a reduced pressure, and the resultant is added to an aqueous emulsion of $pA_X$; or the like. When a polymer $pA_Y$ is obtained by emulsion polymerization, can be preferably employed a method in which this is added, as is, to an aqueous emulsion of $pA_X$.

To the PSA composition, a conventional cross-linking agent can be added (added afterwards, i.e., the cross-linking agent is added after the synthesis of an acrylic polymer), as necessary, with the cross-linking agent being selected from, for instance, carbodiimide-based cross-linking agents, hydrazine-based cross-linking agents, epoxy-based cross-linking agents, isocyanate-based cross-linking agents, oxazoline-based cross-linking agents, aziridine-based cross-linking agents, metal chelate-based cross-linking agents, and silane coupling agents, and so on. Of such cross-linking agents, one kind can be used solely, or two or more kinds can be used in combination. Alternatively, it can be a PSA composition to which essentially no cross-linking agents have been added afterwards. For instance, when an alkoxysilyl-group-containing monomer is copolymerized in either one or both (typically, only in the polymer $pA_X$) of acrylic polymers $pA_X$ and $pA_Y$, can be employed a formulation in which essentially no cross-linking agents have been added afterwards. These cross-linking agents can be added at a ratio of, for instance, 0.01 to 10 parts by mass relative to 100 parts by mass of a total amount of acrylic polymers $pA_X$ and $pA_Y$.

The water-dispersed PSA composition disclosed herein may further comprise a tackifier. As the tackifier, can be used one, two or more kinds selected from rosin-based resins, rosin derivative resins, petroleum-based resins, terpene-based resins, phenol-based resins, ketone-based resins, and so on. Of these, use of a rosin-based resin is particularly preferable. Examples of commercial tackifiers include trade names "SUPER ESTER E-865" (softening point 160°C), "SUPER ESTER E-865NT" (softening point 160°C), "SUPER ESTER E-650NT" (softening point 160°C), "TAMANOL E-100" (softening point 150°C), "TAMANOL E-200" (softening point 150°C), "TAMANOL 803L" (softening point 145 to 160°C), "PENSEL D-160" (softening point 150°C), "PENSEL KK" (softening point 165°C) available from Arakawa Chemical Industries, Ltd., "YS Polyster S series", "YS Polyster T series", "Mighty Ace G series" available from Yasuhara Chemical Co., Ltd., and so on although not limited to these. Of these tackifiers, one kind can be used solely, or two or more kinds can be used in combination. In view of increasing the cohesive strength in a high-temperature environment, a preferable tackifier has a softening point of, for instance, 140°C or above. By using a tackifier having a softening point of about 160°C or above, can be formed a PSA layer having greater properties. The embodiment of adding a tackifier is not particularly limited. Typically, it is added as an aqueous dispersion (a tackifier emulsion) in which the tackifier is dispersed in water.

The amount of a tackifier used can be, for instance, 5 parts by mass or greater relative to 100 parts by mass of the acrylic polymer $pA_X$ and usually by using 10 parts by mass or greater (e.g., 15 parts by mass or greater), good effects can be obtained. In view of the balance with the other adhesive properties (e.g., either one or both of repulsion resistance and holding power), it is suitable that the amount of a tackifier is 40 parts by mass or smaller and it is usually preferable to be 30 parts by mass or smaller (e.g., 25 parts by mass or smaller). When the amount of a tackifier is too small, at least one property out of the repulsion resistance, holding power and edge peel resistance of the obtained PSA sheet may decrease. When the amount of a tackifier is too large, the rough surface adhesiveness may decrease.

The PSA composition may further comprise a polymer component other than polymers $pA_X$ and $pA_Y$. Examples of such a polymer component include polymers having rubberlike or elastomeric properties. Specific examples include ethylene-vinyl acetate copolymers, acrylic rubbers, natural rubbers (NR), isoprene rubbers (IR), styrene butadiene rubbers (SBR), chloroprene rubbers (CR), butyl rubbers (IIR), ethylene propylene rubbers (EPM, EPDM), polyisobutylenes, styrene-ethylene-butylene-styrene copolymers (SEBS), acrylonitrile-butadiene copolymers (NBR), styrene-butadiene-styrene block copolymers (SBS), styrene-isoprene-styrene block copolymers (SIS), polyvinyl alkyl ethers (e.g., polyvinyl isobutyl ether), etc. Of these polymer components, one kind can be used solely, or two or more kinds can be used in combination. Such a polymer component can be mixed with the other components, for instance, in an emulsion form where the polymer component is dispersed in water. It is usually suitable that the amount of this polymer component contained (mixed in) is 50 parts by mass or smaller (e.g., 5 to 50 parts by mass) relative to 100 parts by mass of acrylic polymers based on non-volatiles (solid contents). The amount of such a polymer component can be 5 parts by mass or smaller, or the PSA composition may be essentially free of this polymer component.

In a PSA layer formed of the PSA composition disclosed herein, the PSA preferably has a gel fraction of, for instance, about 20 to 55 %. Conditions such as monomer composition, polymerization degree of monomer components in a PSA composition, the molecular weight of a produced polymer, conditions (drying conditions, photo-irradiation conditions, etc.) for forming a PSA layer, the kind and amount of a cross-linking agent, etc., can be suitably selected so as to form a PSA (in a composition containing a cross-linking agent, a post-crosslink PSA) having such a gel fraction. When the gel fraction of the PSA is too low, the holding power or the edge peel resistance may be insufficient. On the other hand, when the gel fraction is too high, the adhesive strength or the tackiness may decrease and the rough surface adhesiveness may be insufficient.

"Gel fraction of PSA" herein refers to a value measured by the following method. The gel fraction can be understood as the mass fraction of the ethyl-acetate-insoluble portion of a PSA.

<Method for measuring gel fraction>

A PSA sample (weight: $Wg_1$) is wrapped into a pouch with a porous polytetrafluoroethylene membrane (weight: $Wg_2$) having an average pore diameter of 0.2 $\mu$m, and the opening is tied with twine (weight: $Wg_3$). This package is immersed in 50 mL of ethyl acetate and stored at room temperature (typically 23 °C) for 7 days to extract only the sol components of the PSA layer out of the membrane. After this, the package is taken out, and from the outer surface thereof any residual ethyl acetate is wiped off. The package is then dried at 130 °C for 2 hours and the package weight ($Wg_4$) is measured. The gel fraction of the PSA is determined by substituting the respective values into the following equation:

$$\text{Gel Fraction (\%)} = [(Wg_4 - Wg_2 - Wg_3)/Wg_1] \times 100$$

As the porous polytetrafluoroethylene (PTFE) membrane, is desirably used trade name "Nitofuron (registered trade mark) NTF1122" (0.2 $\mu$m average pore diameter, 75 % porosity, 85 $\mu$m thick) available from Nitto Denko Corporation or a similar product is desirably used.

The PSA composition may comprise, as necessary, an acid or a base (aqueous ammonia, etc.) used for adjusting its pH or for other purposes. Examples of other optional components that may be contained in the composition include various additives commonly used in the water-dispersed PSA composition field such as viscosity adjusting agents, leveling agents, plasticizers, fillers, coloring agents such as pigments, dyes, etc., stabilizing agents, preservatives, anti-oxidants, and so on. With respect to these various additives, those heretofore known can be used according to commonly used methods and they do not particularly characterize the present invention; and therefore, detailed explanations are omitted.

The PSA sheet provided by the present invention comprises a PSA layer formed of a PSA composition disclosed herein. It may be a PSA sheet with a substrate, having such a PSA layer on one or each face of the substrate (support), or a substrate-free PSA sheet where the PSA layer is supported by a release liner (which may be understood as a substrate having a release surface), etc. The concept of the PSA sheet described herein may encompass those referred to as PSA tapes, PSA labels, PSA films and the like. Although the PSA layer may be typically formed in a continuous form, it is not limited to such a form. For instance, the PSA layer may be formed in a regular or a random pattern of dots, stripes, etc. The PSA sheet provided by the present invention may be in a roll or in a flat sheet. Alternatively, the PSA sheet may be processed into various other forms.

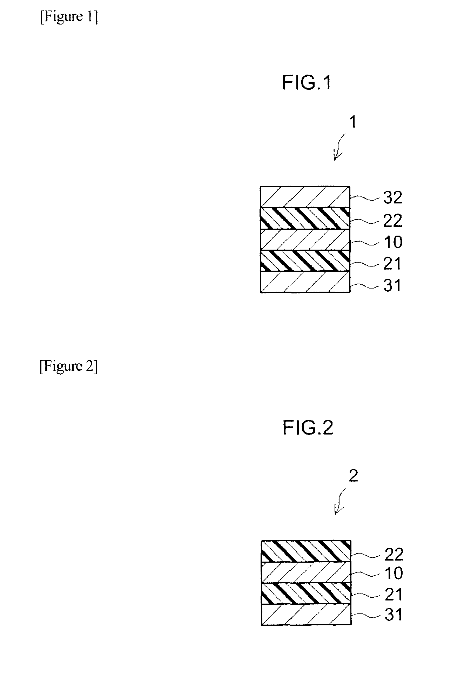

The PSA sheet disclosed herein may have cross-sectional structures schematically illustrated in Figures 1 to 6, for example. Among these, Figures 1 and 2 show examples of configurations of a PSA sheet with a substrate, with the PSA sheet being adhesively double faced. PSA sheet 1 shown in Figure 1 has a configuration in which PSA layers 21 and 22 are provided respectively on each face (each being non-releasable) of substrate 10, and these PSA layers are protected by release liners 31 and 32, respectively, with each liner being releasable at least on the PSA side surface. PSA sheet 2 shown in Figure 2 has a configuration in which PSA layers 21 and 22 are provided respectively on each face (each being non-releasable) of substrate 10 and of these, first PSA layer 21 is protected by release liner 31 releasable on both surfaces. PSA sheet 2 of this kind can be made into a configuration in which PSA layer 22 is also protected by release liner 31 by winding the PSA sheet, whereby PSA layer 22 contacts the back face of release liner 31.

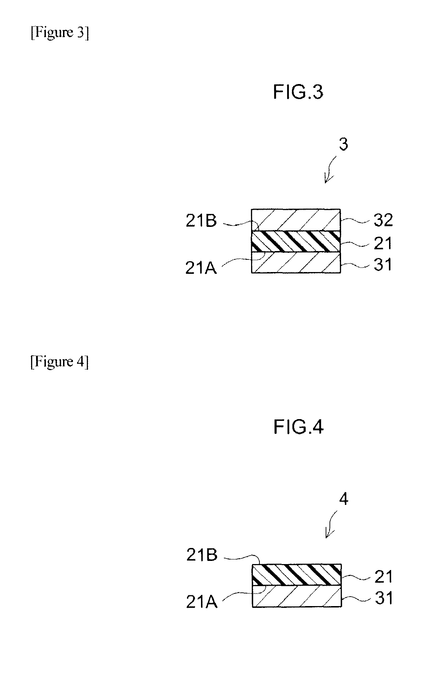

Figures 3 and 4 show examples of configurations of a double-faced PSA sheet without a substrate. PSA sheet 3 shown in Figure 3 has a configuration in which both surfaces 21A and 21B of substrate-free PSA layer 21 are protected by release liners 31 and 32, respectively, with each liner being releasable at least on the PSA side surface. PSA sheet 4 shown in Figure 4 has a configuration in which first surface (adhesive surface) 21 A of substrate-free PSA layer 21 is protected by release liner 31 releasable on both surfaces and winding this al lows second surface (adhesive surface) 21B of PSA layer 21 to contact the back face of release liner 31, whereby second surface 21B is also protected by release liner 31.

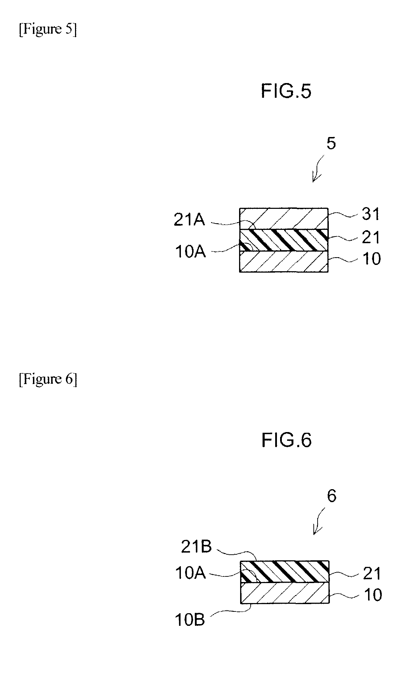

Figures 5 and 6 show examples of configurations of a PSA sheet with a substrate, with the PSA sheet being adhesively single faced. PSA sheet 5 shown in Figure 5 has a configuration in which a PSA layer 21 is provided on first face 10A (non-releasable) of substrate 10, and surface (adhesive surface) 21 A of PSA layer 21 is protected by release liner 31 releasable at least on the PSA side surface. PSA sheet 6 shown in Figure 6 has a configuration in which PSA layer 21 is provided on first face 10A (non-releasable) of substrate 10. Second face 10B of substrate 10 is releasable, and winding PSA sheet 6 al lows second face 10B to contact PSA layer 21, whereby surface (adhesive surface) 21 B of the PSA layer is protected by second face 10B of the substrate.

In a single-faced or a double-faced PSA sheet with a substrate, as the substrate supporting (backing) a PSA layer, can be used a resin film of various kinds (films polyolefins such as polyethylene (PE), polypropylene (PP), ethylene-propylene copolymers, etc.; polyester films such as polyethylene terephthalate (PET), etc.; polyvinyl chloride, etc.; papers (Kraft papers, Washi papers, high-grade papers, etc.); fabrics (cotton fabrics, staple cloth fabrics, PE non-woven fabrics, vinylon non-woven fabrics, etc.) such as woven fabrics or non-woven fabrics of a pure yam or a mixed yarn, etc., of various fibrous materials; rubber sheets (natural rubber sheets, etc.); foam sheets (expanded polyurethane sheets, etc.) formed of foams such as expanded polychloroprene rubbers, etc.; metal foils (aluminum foils, etc.); composites of these; and so on. The substrate may be in a form of a single layer or a laminate. Although the substrate can have a thickness selected according to the purpose, it is generally 10 $\mu$m to 500 $\mu$m (preferably 10 $\mu$m to 200 $\mu$m). In view of the repulsion resistance, a substrate having a thickness of 10 $\mu$m to 50 $\mu$m can be used advantageously. "Non-woven fabric" referred to here conceptually refers to non-woven fabric for use in a PSA sheet, which is used mainly in the field of PSA tapes and other PSA sheets. Typically, it means a non-woven fabric (which may also be referred to as so-called "paper") produced by a general paper machine.

The resin films may be any of non-stretched films, uni-axially stretched films, and bi-axially stretched films. A surface treatment such as primer coating, corona discharge treatment, plasma treatment, etc., can be given to the substrate surface to be provided with a PSA layer.

The PSA layer may have a thickness of, for instance, about 5 $\mu$m to 500 $\mu$m (preferably 5 $\mu$m to 200 $\mu$m). The thickness of a PSA layer referred to here indicates the thickness of a PSA layer on one face in a double-faced PSA sheet where each face of a substrate has a PSA layer. In a PSA sheet for use where it is adhered to an elastic foam such as a flexible polyurethane, etc., in order to obtain good rough surface adhesiveness to the foam, it is advantageous that the PSA layer to be adhered to the foam has a thickness of 30 $\mu$m or greater (preferably 40 $\mu$m or greater). On the other hand, in view of the balance with the other adhesive properties or the productivity, etc., the PSA layer of a PSA sheet preferably has a thickness of 100 $\mu$m or smaller. In a preferred embodiment of the PSA sheet disclosed herein, the PSA sheet satisfies at least one of the properties (A), (B), (C) and (D) described later (more preferably, two or more of these). The PSA layer preferably has a thickness of about 40 $\mu$m to 100 $\mu$m (typically about 50 $\mu$m to 90 $\mu$m, e.g., around 80 $\mu$m). For example, it may be a double-faced PSA sheet obtained by providing a PSA layer of this thickness to each face of a non-woven fabric, a substrate-free double-faced PSA sheet comprising a PSA layer of this thickness, a single-faced PSA sheet comprising a PSA layer of this thickness on one face of a substrate, etc.

As a release liner, a known or a conventional one in the field of PSA sheets can be suitably selected for use. For instance, a release liner used preferably has a configuration in which a release treatment is given as necessary to a face of a substrate formed of various resin films, papers, fabrics, rubber sheets, foam sheets, metal foils, composites of these (e.g., a laminate sheet in which an olefin resin is laminated to each face of a paper), etc.

In a preferred embodiment of the PSA sheet disclosed herein, the PSA sheet satisfies property (A) as follows: that is, it satisfies a property such that when, at 23°C, to a flexible urethane foam having a thickness of 10 mm in a free state (in a state where no external force is applied), the PSA sheet is pressure-bonded with a pressure to compress the urethane foam to a thickness of 2 mm (i.e., 20 % of the thickness based on the free state); and when the 180° peel strength (rough surface adhesive strength as an index for the rough surface adhesiveness) is measured after a lapse of 30 minutes from the time of the pressure-bonding, it has an adhesive strength of 3.0 N/20mm or greater (more preferably 3.5 N/20mm or greater). As the flexible urethane foam, is used trade name "ECS" (gray color) (hereinafter, it may be referred to as simply "ECS foam") available from Inoac Corporation. This ECS foam is a polyether urethane foam having a density of $22 \pm 2$ kg/m$^3$ and a hardness (based on Method D defined in JIS K6400-2(2004)) of $107.9 \pm 22.6$ N. Although the upper limit of the rough surface adhesive strength is not particularly limited, when the toughness of the ECS foam itself is considered, it is usually 10 N/20mm or less.

More particularly, the rough surface adhesive strength can be measured, for instance, by the following way: a PSA sheet to be evaluated is cut into a ribbon (typically a strip) of a prescribed width to prepare a test piece. When the PSA sheet is double-faced with or without a substrate, for better  manipulation and reinforcement of the PSA sheet, it is preferable to adhere a backing material to a first adhesive surface beforehand. As the backing material, can be preferably used, for instance, a polyethylene terephthalate (PET) film having a thickness of about 20 $\mu$m to 30 $\mu$m (typically 25 $\mu$m). Although the width of a test piece (width of the adhesive surface) is usually preferable to be 20 mm, when a test piece having a different thickness of X mm is used, by multiplying the measurement result obtained with this test piece by 20/X, the measurement result can be converted to the adhesive strength per 20 mm width. In the following description, 20 mm wide test pieces are to be used. The length of a test piece can be selected to ensure a bonded length long enough for an adherend. Usually, the bonded length (the length of an adhesive surface) is suitable to be 20 mm or longer and is preferable to be 50 mm or longer.

In an environment at 23°C, to a 10 mm thick ECS foam as an adherend, the test piece is adhered such that it is pressure-bonded to the adherend at a speed of 0.2 m/min via a 2 mm thick spacer. Here, the spacer acts to prevent excessive or insufficient compression of the adherend.

The test piece so-adhered to an adherend is stored in an environment at 23°C for 30 minutes from the time of the pressure-bonding. Subsequently, based on JIS Z 0237(2004), in a measurement environment at 23°C, 50 % RH, the 180° peel strength is measured at a tensile speed of 300 mm/min. This measurement can be carried out using a commercial tension tester. The measurement length (peeled length) is preferably 10 mm or longer and is more preferably 20 mm or longer It is preferable to repeat the measurement two or more times (more preferably three or more times) with different test pieces and use the average value of the measurement results. Immediately after the start of the peeling or midway through the peeling, if part of the adherend is peeled off from the remaining portion along with the PSA sheet, as opposed to that the PSA sheet is peeled off at the interface with the adherend, the rough  surface adhesive strength can be assumed to be at least 3.0 N/20mm or greater.

With a PSA sheet (typically a double-faced PSA sheet) that may be used for a purpose where an elastic foam such as a flexible urethane foam, etc., is adhered to an adherend, may be desired a property (repulsion resistance, i.e., a property to resist repulsion by a foam) that allows the foam to elastically deform along a surface structure (which may be a curved or stepped surface, etc.) and keeps the foam in the elastically deformed shape by resisting a repulsive force exerted by the foam in trying to regain its original shape. It is also preferable to have such repulsion resistance in a single-faced PSA sheet comprising a foam sheet as the substrate (support).

In a preferred embodiment of the PSA sheet disclosed herein, the PSA sheet satisfies property (B) as follows. That is, it has a lifted distance of 3.5 mm or smaller (more preferably 3.0 mm or smaller, even more preferably 1.0 mm or smaller) in repulsion resistance test comprising the steps of: with a 10 mm wide by 50 mm long PSA sheet backed by a 10 mm thick ECS foam as a test piece, pressure-bonding a portion starting from a lengthwise edge to 10 mm in the length direction of this test piece to a 2 mm thick acrylonitrile-butadiene-styrene copolymer resin plate (ABS plate); folding the remaining portion of the test piece over the edge of the ABS plate to be pressure-bonded to the opposite plate face; storing the resultant in an environment at 23°C, 50 % RH for 24 hours; and then measuring a distance (lifted distance) that a lengthwise edge of the test piece lifts off from the ABS plate surface.

More particularly, the repulsion resistance test can be carried out as follows, for instance: to the back face (a surface opposite to the adhesive surface to be evaluated), a 10 mm thick ECS foam is adhered; if the PSA sheet is double-faced with or without a substrate, the ECS foam can be pressure-bonded to an adhesive surface opposite to the adhesive surface to be evaluated; if the PSA sheet is single-faced, the ECS foam can be affixed to the back face of the PSA sheet, using an appropriate double-faced tape (e.g., a double-faced PSA tape with trade name "No. 512" available from Nitto Denko Corporation); this PSA sheet with the ECS foam is cut into a 10 mm wide by 50 mm long strip to prepare a test piece; using this test piece, in accordance with the procedures described in the later examples, repulsion resistance test is conducted.

In a preferred embodiment of the PSA sheet disclosed herein, the PSA sheet satisfies property (C) as follows: it has a holding time of one hour or longer in a holding power test, which is carried out by the method described in the later examples. This holding power test is carried out on two or more (more preferably three or more) different test pieces and when any of the test pieces has dropped off within one hour, the holding power is judged as insufficient (as that the holding time is less than one hour). Preferable is a PSA sheet, whose test pieces are held even after one hour in the holding power test, having a shifted distance (an average value of each test piece) of 5 mm or smaller after a lapse of one hour, with a PSA sheet of a shifted distance of 4 mm or smaller being more preferable.

In a preferred embodiment of the PSA sheet disclosed herein, the PSA sheet satisfies property (D) as follows: in an edge peel resistance test carried out by the method described in the later examples, it has a lifted distance (an average value of both edges) of 5 mm or smaller. This edge peel resistance test is carried out on two or more (more preferably three or more) different test pieces, distances from both edges of each test piece to an adherend are measured respectively, and their average value is used as the lifted distance. A preferable PSA sheet has a lifted distance of 4 mm or smaller and a more preferable PSA sheet has a lifted distance of 3 mm or smaller.

Hereafter, some examples according to the present invention are described with no intention of limiting the present invention to those indicated in the examples. In the description below, "part(s)" and "%" are based on the mass unless otherwise specified.

<Preparation of acrylic polymer emulsion eml1>

To a reaction vessel equipped with a condenser, a nitrogen inlet, a thermometer and a stirrer, 40 parts of ion-exchanged water was placed and stirred at room temperature for more than one hour while introducing nitrogen gas. Subsequently, this system was heated to 60°C, and to this reaction vessel, was added 0.1 part 2,2'-azobis[N-(2-carboxyethyl)-2-methylpropionamidine] hydrate (polymerization initiator) (trade name "VA-057" available from Wako Pure Chemical Industries, Ltd.). To this system kept at 60°C, a monomer emulsion was added over three hours. As the monomer emulsion, was used an emulsion prepared by adding, to 30 parts of ion-exchanged water, 70 parts of 2EHA, 30 parts of BA, 1.5 parts ofAA, 2.5 parts of MAA, 0.02 part of 3-methacryloxypropyl trimethoxysilane (trade name "KBM-503" available from Shin-Etsu Chemical Co., Ltd.), 0.033 part of n-lauryl mercaptan (chain transfer agent), and 2 parts of sodium polyoxyethylene lauryl sulfate (emulsifier). After the addition of the monomer emulsion was completed, the resulting reaction mixture was further stored at 60°C for three hours. After the system was cooled to room temperature, it was adjusted to pH 7.5 by adding 10 % aqueous ammonia to obtain an aqueous emulsion (aqueous dispersion) eml1 of an acrylic polymer ($pA_X$).

The acrylic polymer contained in this emulsion eml1 had a gel fraction of 40 %. This gel fraction was obtained by applying the gel fraction measurement method described earlier to a sample obtained by drying the emulsion eml1 at 130°C for two hours. When measured according to the method described earlier, the THF-soluble portion of the acrylic polymer had an Mw of $80 \times 10^4$.

<Preparation of acrylic polymer emulsion eml2>

To a reaction vessel equipped with a condenser, a nitrogen inlet, a thermometer and a stirrer, 40 parts of ion-exchanged water was placed and stirred at room temperature for more than one hour while introducing nitrogen gas. Subsequently, this system was heated to 60°C, and to this reaction vessel, was added 0.1 part 2,2'-azobis[N-(2-carboxyethyl)-2-methylpropionamidine] hydrate (polymerization initiator) (trade name "VA-057" available from Wako Pure Chemical Industries, Ltd.). To this system kept at 60°C, a monomer emulsion was added over three hours. As the monomer emulsion, was used an emulsion prepared by adding, to 30 parts of ion-exchanged water, 90 parts of BA, 10 parts of 2EHA, 4 parts ofAA, 0.07 part of 3-methacryloxypropyl trimethoxysilane (trade name "KBM-503" available from Shin-Etsu Chemical Co., Ltd.), 0.05 part of n-lauryl mercaptan (chain transfer agent), and 2 parts of sodium polyoxyethylene lauryl sulfate (emulsifier). After the addition of the monomer emulsion was completed, the resulting reaction mixture was further stored at 60°C for three hours. After the system was cooled to room temperature, it was adjusted to pH 7.5 by adding 10% aqueous ammonia to obtain an aqueous emulsion eml2 of an acrylic polymer ($pA_X$).

<Example 1>

To a reaction vessel equipped with a condenser, a nitrogen inlet, a thermometer, and a stirrer, were added 100 parts of BA, 10 parts of AA, 23 parts of tert-lauryl mercaptan, 0.2 part of AIBN, and 200 parts of ethyl acetate. The reaction mixture was stirred at room temperature for one hour under nitrogen gas flow, heated to 60°C with continuous stirring, stored at this temperature for three hours, and then stored at 75°C for three hours. By this way, was prepared a solution of an acrylic polymer ($pA_Y$) in which BA as a primary monomer (a component that accounts for 50 % by mass or greater of all monomer components) and AA as a functional group-containing monomer were copolymerized. This acrylic polymer ($pA_Y$) has a copolymer composition containing 91 % of BA and 9 % ofAA when all monomer components account for 100 %.

Based on solid contents, to 100 parts of polymer emulsion eml1, were added 20 parts of the acrylic polymer solution and 20 parts of a tackifier (a polymerized rosin ester with a softening point of 170°C) to obtain a water-dispersed PSA composition. To this, was added a suitable amount of a polyacrylic acid (trade name "Aron B-500" available from Toagosei Co., Ltd.) as a thickener to adjust the viscosity. The resultant was applied to a first face (release surface) of a release liner (trade name "Diafoil MRF-38" available from Mitsubishi Plastics Inc.) and was allowed to dry at 100°C for three minutes to form a PSA layer having a thickness of 80 μm, whereby a PSA sheet according to this example was obtained.

<Example 2>

In the same way as Example 1 except that the amount of AA was 20 parts, was prepared an acrylic polymer solution. This acrylic polymer (pA$_Y$) has a copolymer composition of 83 % BA and 17 % AA. In the same way as Example 1 except that this polymer solution was used, was obtained a PSA sheet according to this example.

<Example 3>

In the same way as Example 1 except that the amount of AA was 35 parts, was prepared a solution of an acrylic polymer (copolymer composition: 74 % BA, 26 % AA). In the same way as Example 1 except that this polymer solution was used, was obtained a PSA sheet according to this example.

<Example 4>

In the same way as Example 1 except that the amount of AA was 50 parts, was prepared a solution of an acrylic polymer (copolymer composition: 67 % BA, 33 % AA). In the same way as Example 1 except that this polymer solution was used, was obtained a PSA sheet according to this example.

<Example 5>

In the same way as Example 1 except that 30 parts of trade name "Aronix M5600" (acrylic acid dimer) available from Toagosei Co., Ltd., was used in place of 10 parts of AA, was prepared a solution of an acrylic polymer (copolymer composition: 77 % BA, 23 % M5600). In the same way as Example I except that this polymer solution was used, was obtained a PSA sheet according to this example.

<Example 6>

In the same way as Example 5 except that the amount of M5600 was 40 parts, was prepared an acrylic polymer solution (copolymer composition: 71 % BA, 29 % M5600). In the same way as Example I except that this polymer solution was used, was obtained a PSA sheet according to this example.

<Example 7>

In the same way as Example I except that 100 parts of 2EHA was used in place of 100 parts of BA, was prepared an acrylic polymer solution (copolymer composition: 91 % 2EHA, 9 % AA). In the same way as Example 1 except that this polymer solution was used and polymer emulsion eml2 was used in place of polymer emulsion eml1, was obtained a PSA sheet according to this example.

<Example 8>

Based on solid contents, to 100 parts of polymer emulsion eml1, was added, as a tackifier, 20 parts of a rosin-based resin (trade name "KE-802" available from Arakawa Chemical Industry Co., Ltd.) to obtain a water-dispersed PSA composition. In the same way as Example 1 except that this water-dispersed PSA composition was used, was obtained a PSA sheet according to this example.

<Example 9>

In the same way as Example I except that polymer emulsion eml2 was used in place of polymer emulsion eml1, was prepared a water-dispersed PSA composition and using this PSA composition, was obtained a PSA sheet according to this example.

<Example 10>

In the same way as Example 1 except that the amount of AA was 20 parts, was prepared an acrylic polymer solution. In the same way as Example 1 except that this polymer solution was used and further, polymer emulsion eml2 was used in place of polymer emulsion eml1, was prepared a water-dispersed PSA composition and using this composition, was obtained a PSA sheet according to this example.

<Example 11>

In the same way as Example I except that 30 parts of trade name "Aronix M5600" (acrylic acid dimer) available from Toagosei Co., Ltd., was used in place of 10 parts of AA, was prepared an acrylic polymer solution. In the same way as Example 1 except that this polymer solution was used and further, polymer emulsion eml2 was used in place of polymer emulsion eml1, was prepared a water-dispersed PSA composition and using this PSA composition, was obtained a PSA sheet according to this example.

<Example 12>

In the same way as Example 11 except that amount of M5600 was 40 parts, was prepared an acrylic polymer solution. In the same way as Example I except that this polymer solution was used and further, polymer emulsion eml2 was used in place of polymer emulsion eml1, was prepared a water-dispersed PSA composition and using this PSA composition, was obtained a PSA sheet according to this example.

<Example 13>

In the same way as Example I except that the ratio of the acrylic polymer solution used was 5 parts to 100 parts of polymer emulsion eml1, was prepared a water-dispersed PSA composition and using this PSA composition, was obtained a PSA sheet according to this example.

<Example 14>

In the same way as Example 1 except that the ratio of the acrylic polymer solution used was 40 parts to 100 parts of polymer emulsion eml1, was prepared a water-dispersed PSA composition and using this PSA composition, was obtained a PSA sheet according to this example.

<Example 15>

In the same way as Example 1 except that the amount of AA was 20 parts, was prepared an acrylic polymer solution. In the same way as Example I except that the ratio of acrylic polymer solution used was 5 parts to 100 parts (all based on solid contents) of polymer emulsion eml1, was prepared a water-dispersed PSA composition and using this PSA composition, was obtained a PSA sheet according to this example.

<Example 16>

In the same way as Example 15 except that the ratio of acrylic polymer solution used was 40 parts to 100 parts (all based on solid contents) of polymer emulsion eml1 ,was prepared a water-dispersed PSA composition and using this PSA composition, was obtained a PSA sheet according to this example.

<Example 17>

In the same way as Example I except that the amount of AA was 20 parts and the amount of tert-lauryl mercaptan was changed from 23 parts to 0.5 part, was prepared an acrylic polymer solution. In the same way as Example 1 except that this polymer solution was used, was obtained a PSA sheet according to this example.
With respect to the water-dispersed PSA compositions according to Examples 1 to 17, the properties of the acrylic polymers contained in the respective compositions are shown in Table 1. It is noted that the gel fractions of the PSA's according to Examples 1 to 17 were measured and all were in the range of 20 to 55 %.

<SP value>

With respect to the polymers contained in the acrylic polymer emulsion and the acrylic solution according to each example, in accordance with the method described earlier, the SP values were calculated. The results are shown in Table 1 and the absolute values of the SP value differences, $\Delta$SP $(cal/cm^3)^{1/2}$, are shown in Table 2.

<Measurement for weight average molecular weight Mw>

With respect to the acrylic polymer ($pA_Y$) contained in the acrylic polymer solution used in each example, a solution for measurement was prepared to contain the polymer at a concentration of 0.2 % in 10 mM LiBr + 10 mM phosphoric acid/DMF, and by gel permeation chromatography (GPC), the weight average molecular weight (Mw) was determined based on polystyrene calibration curve under the following conditions:

Eluent: 10 mM LiBr + 10 mM phosphoric acid/DMF solution
Device: Model number "HLC-8120GPC" available from TOSOH Corporation
Column: Three columns, namely TSKgel SuperAWM-H, TSKgel SuperAW4000 and TSKgel SuperAW2500, were connected.
Column temperature: 40°C
Flow rate: 0.4 mL/min

<Evaluation of rough surface adhesiveness>

As an adherend, a 10 mm thick flexible urethane foam (trade name "ECS" (gray color) available from Inoac Corporation) was cut into a size of 30 mm wide by 100 mm long.

In an environment at 23°C, to a first adhesive surface of each PSA sheet prepared in Examples I to 17, was adhered a 25 $\mu$m thick polyethylene terephthalate (PET) film for backing. This backed PSA sheet was cut into a size of 20 mm wide by 100 mm long to prepare a test piece. The release liner was removed from this test piece and this was pressure-bonded to the adherend by pressing via a 2 mm thick spacer with a laminator at a speed of 0.2 m/min. This was stored at 23°C for 30 minutes, and based on JIS Z 0237(2004), using a tensile tester, the 180° peel strength (rough surface adhesive strength) was measured at a peel rate of 300 mm/min in a measurement environment at 23 °C, 50 % RH. The measurement was taken at least over a length of 10 mm or longer. Three test pieces were prepared from the PSA sheet according to each example and the average value of the three measurement values taken with these was determined.

<Repulsion resistance test>

In an environment at 23°C, a first adhesive surface of each PSA sheet was pressure-bonded to a 10 mm thick flexible urethane foam (trade name "ECS" (gray color) available from Inoac Corporation) by moving a 1 kg roller back and forth once. After this was stored at 23°C for one day, this was cut into 10 mm wide by 50 mm long to prepare a test piece.

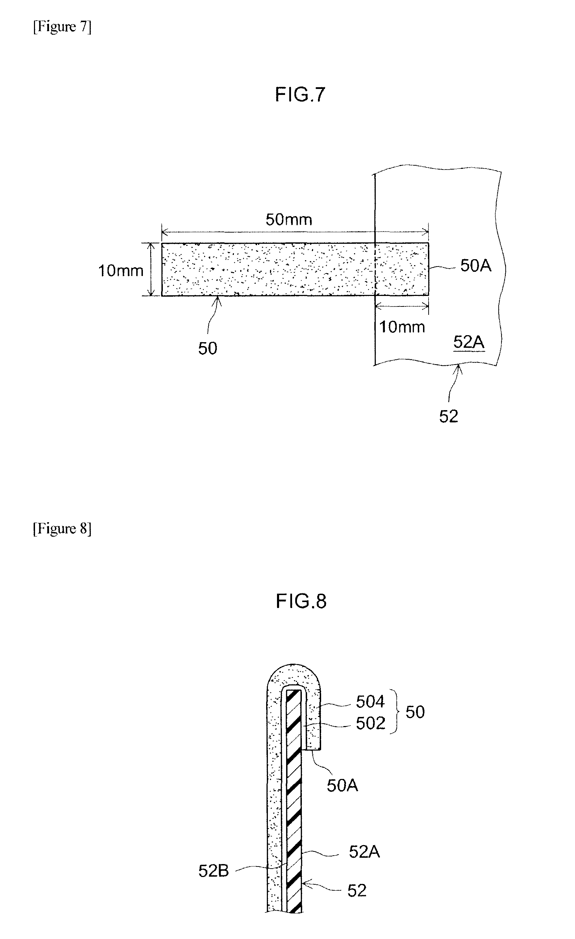

As shown in Figure 7, from a second adhesive surface of this test piece 50, the release liner was removed, and of the exposed adhesive surface, a portion starting from edge 50A up to 10 mm in the length direction (i.e., an adhesion area of 10 mm wide by 10 mm long) was pressure-bonded to an outer region in first surface 52A of 2 mm thick ABS plate 52 by moving a 2 kg roller back and forth once. Here, test piece 50 was placed so that its 10 mm line from edge 50A lined up with an outer edge of ABS plate 52 and the remaining portion of test piece 50 extended perpendicularly off from ABS plate 52. Subsequently, as shown in Figure 8, the remaining portion (10 mm wide, 40 mm long) of test piece 50 was bent and adhered over the edge of ABS plate 52 onto second surface 52B. In Figure 8, reference sign 502 refers to a PSA sheet and reference sign 504 refers to a urethane foam pressure-bonded to a first adhesive surface of the PSA sheet. After this was left in an environment at 23°C, 50% RH for 24 hours was measured the lifted distance of edge 50A of test piece 50. Three test pieces were prepared from the PSA sheet according to each example and an average value was determined from the lifted distances of these test pieces. When test piece 50 was completely peeled off from surface 52A, it is indicated as "Peeled off" in Table 2.

<Holding power test>

Based on JIS Z 0237(2004), holding power test was carried out. In particular, in an environment at 23°C, to a first adhesive surface of each PSA sheet, was adhered a 25 $\mu$m PET film for backing. This backed PSA sheet was cut to 10 mm wide o prepare a test piece. From a second adhesive surface of this test piece, the release liner was removed, and the exposed adhesive surface was adhered to a phenol resin plate as an adherend over a bonding area of 10 mm wide by 20 mm long. After this was left in an environment at 40°C for 30 minutes, the phenol resin plate was vertically hung with a 500 g load applied to the free end (lower end) of the test piece. In the state with the applied load, it was left in an environment at 40°C for one hour. The distance (mm) that the test piece was shifted from the originally adhered place was measured. Three test pieces were prepared from the PSA sheet according to each example and the holding power test was carried out on the respective test pieces. After a lapse of one hour, when any of the three test pieces dropped off, it was judged as that the holding time was less than one hour (in Table 2, it is indicated as "Dropped"). Otherwise, with respect to the three test pieces, the distance (mm) that the test piece was shifted from the originally adhered place was measured and their average value was determined.

<Evaluation of edge peel resistance>

Each PSA sheet was cut into a size of 10 mm wide by 90 mm long and its adhesive surface was adhered to an aluminum piece (0.4 mm thick, 10 mm wide, 90 mm long) cut in the same size to prepare a test piece. This test piece was wrapped lengthwise around a rod of 50 mm diameter so that the aluminum piece side was on the inside, and was pressed for about 10 seconds to warp it into an arc. From this test piece, the release liner was removed, and the exposed adhesive surface was pressure-bonded to a PP plate (2 mm thick) using a laminator. After this was stored in an environment at 23°C, 50% RH for 24 hours, with respect to both of the lengthwise edges of the test piece, was individually measured the height (mm) that each edge had lifted off from the PP plate surface (the distance from the PP plate surface to the test piece edge). Three test pieces were prepared from the PSA sheet according to each example and an average was determined from the results measured for both edges of the respective test pieces, six points in total. The results (lifted distances) are shown in Table 2 as characteristic values representing their edge peel resistance. When the average value exceeded 5 mm, it is indicated as "Peeled off" in Table 2.

These evaluation results are shown along with the ratio of $pA_X$ to $pA_Y$ in Table 2.

[Table 1]

| Example | $pA_X$ | | $pA_Y$ | | | | Mw |
| | Emulsion | SP value $(cal/cm^3)^{1/2}$ | Primary monomer | SP value $(cal/cm^3)^{1/2}$ | Functional-group-containing monomer | | |
| | | | | | Kind | Amount* | |
| 1 | eml1 | 9.43 | BA | 9.77 | AA | 10 | 2900 |
| 2 | eml1 | 9.43 | BA | 9.77 | AA | 20 | 3200 |
| 3 | eml1 | 9.43 | BA | 9.77 | AA | 35 | 3500 |
| 4 | eml1 | 9.43 | BA | 9.77 | AA | 50 | 3900 |
| 5 | eml1 | 9.43 | BA | 9.77 | M5600 | 30 | 3200 |
| 6 | eml1 | 9.43 | BA | 9.77 | M5600 | 40 | 3500 |
| 7 | eml2 | 9.73 | 2EHA | 9.22 | AA | 10 | 3300 |
| 8 | eml1 | 9.43 | - | - | - | - | - |
| 9 | eml2 | 9.73 | BA | 9.77 | AA | 10 | 2900 |
| 10 | eml2 | 9.73 | BA | 9.77 | AA | 20 | 3200 |
| 11 | eml2 | 9.73 | BA | 9.77 | M5600 | 30 | 3200 |
| 12 | eml2 | 9.73 | BA | 9.77 | M5600 | 40 | 3500 |
| 13 | eml1 | 9.43 | BA | 9.77 | AA | 10 | 2900 |
| 14 | eml1 | 9.43 | BA | 9.77 | AA | 10 | 2900 |
| 15 | eml1 | 9.43 | BA | 9.77 | AA | 20 | 3200 |
| 16 | eml1 | 9.43 | BA | 9.77 | AA | 20 | 3200 |

(continued)

| Example | pA$_X$ | | pA$_Y$ | | | | Mw |
| | Emulsion | SP value (cal/cm$^3$)$^{1/2}$ | Primary monomer | SP value (cal/cm$^3$)$^{1/2}$ | Functional-group-containing monomer | | |
| | | | | | Kind | Amount* | |
| 17 | eml1 | 9.43 | BA | 9.77 | AA | 20 | 10$^6$ |

*Showing the copolymerization amount (parts by mass) of the functional-group-containing monomer relative to 100 parts of the primary monomer.

[Table 2]

| Example | pA$_X$ (parts) | pA$_Y$ (parts) | ΔSP (cal/cm$^3$)$^{1/2}$ | Rough surface adhesive strength (N/20mm) | Repulsion resistance (mm) | Holding power (mm) | Edge peel resistance (mm) |
|---|---|---|---|---|---|---|---|
| 1 | 100 | 20 | 0.34 | 3.6 | 0.7 | 2.3 | 0.8 |
| 2 | 100 | 20 | 0.34 | 6.8 | 0.3 | 2.3 | 0.5 |
| 3 | 100 | 20 | 0.34 | 6.3 | 0.0 | 1.3 | 0.8 |
| 4 | 100 | 20 | 0.34 | 4.3 | 0.5 | 0.9 | 2.4 |
| 5 | 100 | 20 | 0.34 | 4.9 | 1.0 | 3.5 | 0.7 |
| 6 | 100 | 20 | 0.34 | 4.8 | 0.3 | 2.8 | 0.5 |
| 7 | 100 | 20 | 0.51 | 6.1 | 3.0 | 0.5 | 3.5 |
| 8 | 100 | 0 | - | 0.3 | 1.0 | 0.8 | 0.5 |
| 9 | 100 | 20 | 0.04 | 2.6 | Peeled off | 0.5 | Peeled off |
| 10 | 100 | 20 | 0.04 | 2.4 | 5.2 | 0.5 | 4.3 |
| 11 | 100 | 20 | 0.04 | 2.7 | Peeled off | 1.9 | Peeled off |
| 12 | 100 | 20 | 0.04 | 3.0 | Peeled off | 1.3 | Peeled off |
| 13 | 100 | 5 | 0.34 | 0.9 | 0.0 | 0.9 | 0.5 |
| 14 | 100 | 40 | 0.34 | 5.5 | 0.0 | Dropped | Peeled off |
| 15 | 100 | 5 | 0.34 | 1.3 | 0.0 | 0.9 | 0.5 |
| 16 | 100 | 40 | 0.34 | 8.7 | 0.7 | Dropped | Peeled off |
| 17 | 100 | 20 | 0.34 | 2.1 | 0.0 | 0.8 | 0.7 |

As shown in Table 2, the PSA sheets according to Examples 1 to 7 all exhibited a rough surface adhesive strength exceeding 3.5 N/20mm and also had excellent repulsion resistance, holding power and edge peel resistance at the same time, with each PSA having been produced with a PSA composition comprising a polymer corresponding to pA$_Y$ in addition to a polymer corresponding to pA$_X$ while having a ASP of 0.25 (cal/cm$^3$)$^{1/2}$ or greater (about 0.5 (J/cm$^3$)$^{1/2}$ or greater).

On the other hand, the PSA sheet of Example 8, which had been produced with a PSA composition not containing a polymer corresponding to pA$_Y$, had an extremely low rough surface adhesive strength of 0.3 N/20mm. The PSA sheets of Examples 9 to 12, each comprising a polymer corresponding to pA$_Y$, but having a low ASP of less than 0.25 (cal/cm$^3$)$^{1/2}$ (more specifically, as low as 0.04 (cal/cm$^3$)$^{1/2}$), all exhibited poorer rough surface adhesiveness as compared to Examples 1 to 7 and their repulsion resistance and edge peel resistance were also low. In the PSA sheets of Examples 13 and 15, which had been produced with a PSA composition comprising an excessively small amount of a polymer corresponding to pA$_Y$, the effect of increasing the rough surface adhesiveness was insufficient. The PSA sheets of Examples 14 and 16, which had been produced with a PSA composition comprising an excessively large amount of a polymer corresponding to pA$_Y$, resulted to exhibit low holding power and low edge peel resistance.

[Reference Signs List]

1, 2, 3, 4, 5, 6: PSA sheet
10: substrate
10A: substrate surface (non-releasable)
21, 22: PSA layer
21A, 21B: adhesive surface
31, 32: release liner
50: test piece
50A: edge
502: PSA sheet
504: urethane foam
52: ABS plate
52A: first surface
52B: second surface

**Claims**

1. A water-dispersed pressure-sensitive adhesive composition comprising in an aqueous solvent an acrylic polymer pA$_X$ and an acrylic polymer pA$_Y$
wherein:

the polymer pA$_X$ and the polymer pA$_Y$ have a mass ratio of 100:6 to 100:35;
the polymer pA$_X$ has a copolymer composition containing 60 to 99.5 % by mass of an alkyl (methacrylate M1$_X$ having an alkyl group with 2 to 18 carbon atoms and 0.5 to 12 % by mass of a functional-group-containing monomer M2$_X$ when all monomers constituting the polymer in total account for 100 % by mass;
the polymer pA$_Y$ has a weight average molecular weight Mw of I $\times$ 10$^3$ to 50 $\times$ 10$^3$, and has a copolymer composition containing 60 to 95 % by mass of an alkyl (meth)acrylate M1$_Y$ having an alkyl group with 2 to 18 carbon atoms and 5 to 40 % by mass of a functional-group-containing monomer M2$_Y$ when all monomers constituting the polymer in total account for 100 % by mass; and
when SP$_X$ is a solubility parameter calculated from a composition of the alkyl (meth)acrylate M I $_X$ constituting the polymer pA$_X$ and SP$_Y$ is a solubility parameter calculated from a composition of the alkyl (meth)acrylate M 1$_Y$ constituting the polymer pA$_Y$, a solubility difference $\Delta$SP defined as the absolute value |SP$_Y$ - SP$_X$| of a difference between SP$_Y$ and SP$_X$ is 0.25 (cal/cm$^3$)$^{1/2}$ or greater.

2. The water-dispersed pressure-sensitive adhesive composition according to Claim 1, wherein the monomer M2$_Y$ comprises at least one kind of a carboxyl-group-containing monomer.

3. The water-dispersed pressure-sensitive adhesive composition according to Claim 1 or 2, wherein the monomer M2$_Y$ comprises at least either one of acrylic acid and acrylic acid dimer.

4. The water-dispersed pressure-sensitive adhesive composition according to any one of Claims I to 3, wherein the polymer pA$_X$ has a weight average molecular weight for its tetrahydrofuran-soluble portion of 30 $\times$ 10$^4$ to 100 $\times$ 10$^4$.

5. The water-dispersed pressure-sensitive adhesive composition according to any one of Claims I to 4, further comprising 5 to 40 parts by mass of a tackifier relative to 100 parts by mass of the polymer pAx.

6. The water-dispersed pressure-sensitive adhesive composition according to Claim 5, wherein the tackifier is a rosin-based resin.

7. A pressure-sensitive adhesive sheet comprising a pressure-sensitive adhesive layer formed of the water-dispersed pressure-sensitive adhesive composition according to any one of Claims I to 6.

[Figure 1]

FIG.1

1

32
22
10
21
31

[Figure 2]

FIG.2

2

22
10
21
31

[Figure 3]

# FIG.3

3

21B — 32
— 21
21A — 31

[Figure 4]

# FIG.4

4

21B — 21
21A — 31

[Figure 5]

FIG.5

5

21A ⟍               ⟋ 31

⟍ 21

10A ⟍               ⟋ 10

[Figure 6]

FIG.6

6

21B ⟍

10A ⟍            ⟋ 21

⟍ 10

10B ⟍

[Figure 7]

## FIG.7

50mm

10mm

50A

50

10mm

52A

52

[Figure 8]

## FIG.8

504
502
50

50A

52A

52B

52

<table>
<tr><td colspan="2" align="center">**INTERNATIONAL SEARCH REPORT**</td><td>International application No.<br>PCT/JP2012/050713</td></tr>
</table>

| A. CLASSIFICATION OF SUBJECT MATTER |
|---|
| $C09J133/06$(2006.01)i, $C09J7/00$(2006.01)i, $C09J11/08$(2006.01)i, $C09J133/04$(2006.01)i, $C09J193/04$(2006.01)i |

According to International Patent Classification (IPC) or to both national classification and IPC

| B. FIELDS SEARCHED |
|---|
| Minimum documentation searched (classification system followed by classification symbols)<br>C09J133/06, C09J7/00, C09J11/08, C09J133/04, C09J193/04 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2005-170990 A (Nitto Denko Corp.),<br>30 June 2005 (30.06.2005),<br>claims; paragraph [0021]; examples 1 to 3<br>(Family: none) | 1-7 |
| X<br>A | JP 8-269431 A (Mitsubishi Chemical BASF Co.,<br>Ltd.),<br>15 October 1996 (15.10.1996),<br>comparative example 3; tables 1 to 3<br>(Family: none) | 1-3,7<br>4-6 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>11 April, 2012 (11.04.12) | Date of mailing of the international search report<br>24 April, 2012 (24.04.12) |
|---|---|
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011052076 A
- JP 2010018689 A

- JP S568476 B

**Non-patent literature cited in the description**

- *Journal of the Adhesion Society of Japan,* 1986, vol. 22 (10), 566